# EUROPEAN PATENT APPLICATION

(11) **EP 4 614 299 A1**
(43) Date of publication of application: **10.09.2025**
(21) Application number: 23900881.6
(22) Date of filing: 19.10.2023
(51) Int. Cl.: G06F 3/04842, G06F 3/0481, G06F 21/31, G06F 3/0485, G06F 3/04883, H04M 1/72454, G06F 3/0482, G06F 3/04817, H04M 1/675, H04M 1/72469

(54) **ELECTRONIC DEVICE AND METHOD FOR DISPLAYING PLURALITY OF SCREENS FOR USER INFORMATION**

(30) Priority: 09.12.2022 KR 20220171973; 16.12.2022 KR 20220177121
(71) Applicant: Samsung Electronics Co., Ltd., Suwon-si, Gyeonggi-do 16677 (KR)
(72) Inventor: CHAI, Heewoong, Suwon-si Gyeonggi-do 16677 (KR)
(74) Representative: Gulde & Partner
(86) International application number: PCT/KR2023/016266
(87) International publication number: WO 2024/122861

(57) **Abstract**

This electronic device may comprise a display and a processor. The processor can be configured to: display, in a display area of the display, a first screen for a first subscriber identity module (SIM), and a visual object for displaying a second screen for a second SIM with the first screen; display the first screen in a first partial area of the display area and display the second screen in a second partial area of the display area; extend and display the second screen in the display area on the basis of an input indicating movement of a boundary between the first screen and the second screen in a first direction; change settings of the electronic device on the basis of settings information related to the second SIM; display the first screen in the display area on the basis of an input indicating movement of the boundary in a second direction; and change the settings on the basis of settings information related to the first SIM.

## Description

### [Technical Field]

The following descriptions relate to an electronic device and a method for displaying a plurality of screens for user information.

### [Background Art]

An electronic device may include at least one subscriber identity module (SIM). The SIM may include a physical SIM (pSIM) and an embedded SIM (eSIM). The electronic device may provide a service based on a plurality of SIMs. For example, the electronic device may use two SIMs (dual SIMs). The electronic device may display a screen for each of the two SIMs via a display.

### [Disclosure]

### [Technical Solution]

An electronic device is provided. The electronic device may comprise a display. The electronic device may comprise a processor. The processor may be configured to display, in a display region of the display, a visual object for concurrently displaying a first screen for a first subscriber identity module (SIM) and a second screen for a second SIM different from the first SIM. The processor may be configured to, in response to an input for the visual object, display the first screen in a first partial region in the display region and display the second screen in a second partial region in the display region. The processor may be configured to, based on at least a portion of a user input representing moving a boundary between the first screen and the second screen toward a first direction, display the second screen by extending the second screen in the display region and change a setting of the electronic device based on configuration information related to the second SIM. The processor may be configured to, based on at least a portion of a user input representing moving the boundary toward a second direction opposite to the first direction, display the first screen in the display region and change a setting of the electronic device based on configuration information related to the first SIM.

A method performed by an electronic device is provided. The method may comprise displaying, in a display region of a display of the electronic device, a visual object for concurrently displaying a first screen for a first subscriber identity module (SIM) and a second screen for a second SIM different from the first SIM. The method may comprise, in response to an input for the visual object, displaying the first screen in a first partial region in the display region and displaying the second screen in a second partial region in the display region. The method may comprise, based on at least a portion of a user input representing moving a boundary between the first screen and the second screen toward a first direction, displaying the second screen by extending the second screen in the display region and changing a setting of the electronic device based on configuration information related to the second SIM. The method may comprise, based on at least a portion of a user input representing moving the boundary toward a second direction opposite to the first direction, displaying the first screen by extending the first screen in the display region and changing the setting of the electronic device based on configuration information related to the first SIM.

### [Description of the Drawings]

FIG. 1 is a block diagram of an electronic device in a network environment according to various embodiments.
FIG. 2 illustrates an example of an electronic device using a dual mode for a dual subscriber identity module (SIM) according to an embodiment of the present disclosure.
FIGS. 3A and 3B illustrate examples of an electronic device that provides a dual subscriber identity module (SIM) service.
FIGS. 4A and 4B illustrate an example of a method that provides a dual mode according to an embodiment of the present disclosure.
FIGS. 5A to 5C illustrate examples of providing a dual SIM service based on a dual mode according to an embodiment of the present disclosure.
FIGS. 6A to 6C illustrate examples of a method for terminating a dual mode according to an embodiment of the present disclosure.
FIG. 7 illustrates examples of a screen for a hidden mode of a visual object for a dual mode according to an embodiment of the present disclosure.
FIGS. 8A and 8B illustrate examples of a method of providing a multi profile service based on a dual mode according to an embodiment of the present disclosure.
FIG. 9 illustrates another example of an electronic device using a dual mode for a dual subscriber identity module (SIM) according to an embodiment of the present disclosure.
FIG. 10 illustrates examples of a visual object for a dual mode according to an embodiment of the present disclosure.
FIG. 11 illustrates an example of displaying screens of different sizes using a dual mode according to an embodiment of the present disclosure.
FIG. 12 illustrates an example of a method of transmitting data in a dual mode according to an embodiment of the present disclosure.
FIGS. 13A and 13B are flowcharts illustrating an example of a method of providing a dual SIM service based on a dual mode according to an embodiment of the present disclosure.
FIGS. 14A and 14B illustrate an example of a state of a display of an electronic device according to an embodiment of the present disclosure.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a configuration of a device (e.g., a processor, a camera, a display, a module, a communication circuit, and the like), a term for a calculation state (e.g., a step, an operation, and a procedure), a term referring to a signal (e.g., a signal, information, data, a stream, a user input, an input, and the like), and a term referring to data (e.g., a parameter, a value, and the like) used in the following description, are exemplified for convenience of explanation. Therefore, the present disclosure is not limited to the terms described below, and another term with an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' mean at least one of elements from A (including A) and from B(including B).

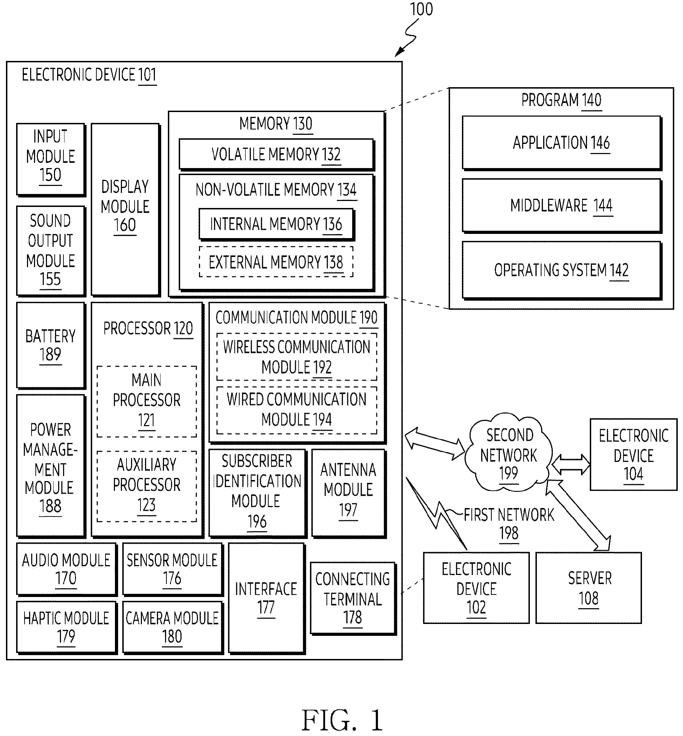

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

Hereinafter, in the present disclosure, a dual mode may represent a state in which a plurality of screens for a plurality of subscriber identity modules (SIMs) are displayed via a display. For example, the electronic device 101 in the dual mode may display two screens for two SIMs via the display. However, this is only for convenience of explanation, and an embodiment of the present disclosure is not limited thereto. For example, the dual mode may be referred to represent a state in which a plurality of screens for three or more SIMs are displayed via the display.

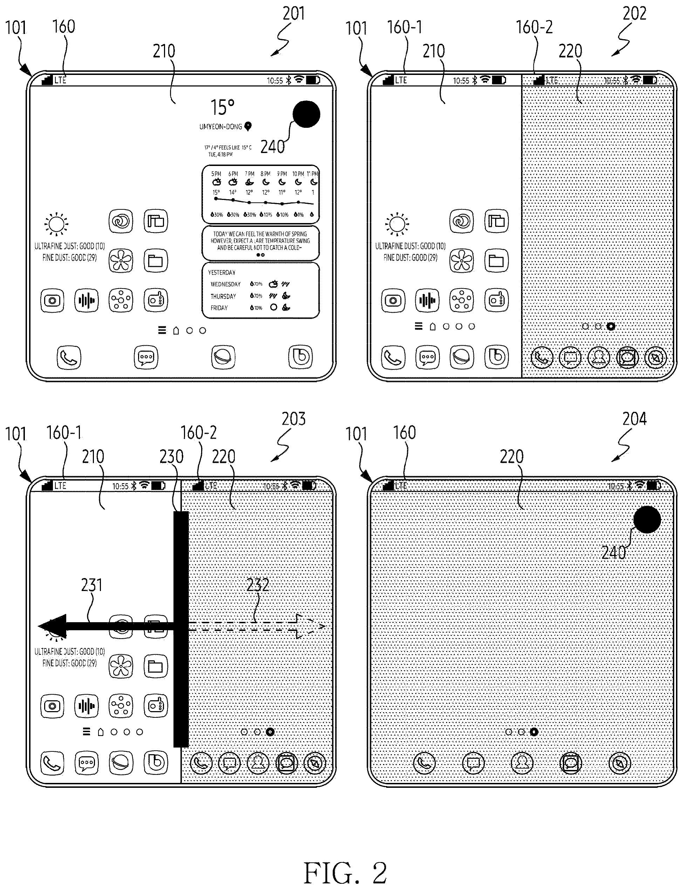

FIG. 2 illustrates an example of an electronic device using a dual mode for a dual subscriber identity module (SIM) according to an embodiment of the present disclosure.

FIG. 2 illustrates an example of an electronic device 101 using a dual mode for two SIMs (dual SIMs) for convenience of explanation, but an embodiment of the present disclosure is not limited thereto. For example, an embodiment of the present disclosure may include the electronic device 101 using a dual mode for three or more SIMs. The SIM may include a physical SIM (pSIM) and an embedded SIM (eSIM).

The electronic device 101 of FIG. 2 may include some or all of components of the electronic device 101 of FIG. 1. For example, the electronic device 101 of FIG. 2 may include a processor 120 of FIG. 1. The electronic device 101 of FIG. 2 may include a foldable type terminal or a bar type terminal.

Referring to FIG. 2, in an example 201, the processor 120 may display a first screen 210 via a display 160. For example, the first screen 210 may represent a screen for a first SIM set in the electronic device 101. The first screen 210 may include a first set of visual object for displaying a first set of software application. For example, the first set of software application may include a software application that provides a call function. The software application that provides the call function for the first SIM may execute a function of outputting first acoustic data for notifying reception of a call. In addition, the first set of software application may be set based on a first theme. The theme may represent a set of resources that may be applied to a style and a layout of the software application. For example, the first theme may include a black theme and a white theme. For example, the first screen 210, the first set of software application related to the first SIM, and a setting (e.g., acoustic data, theme) of the first set of software application may be included in a setting of the electronic device 101. The first set of software application related to the first SIM and the first screen 210 for displaying the same may be set based on first configuration information.

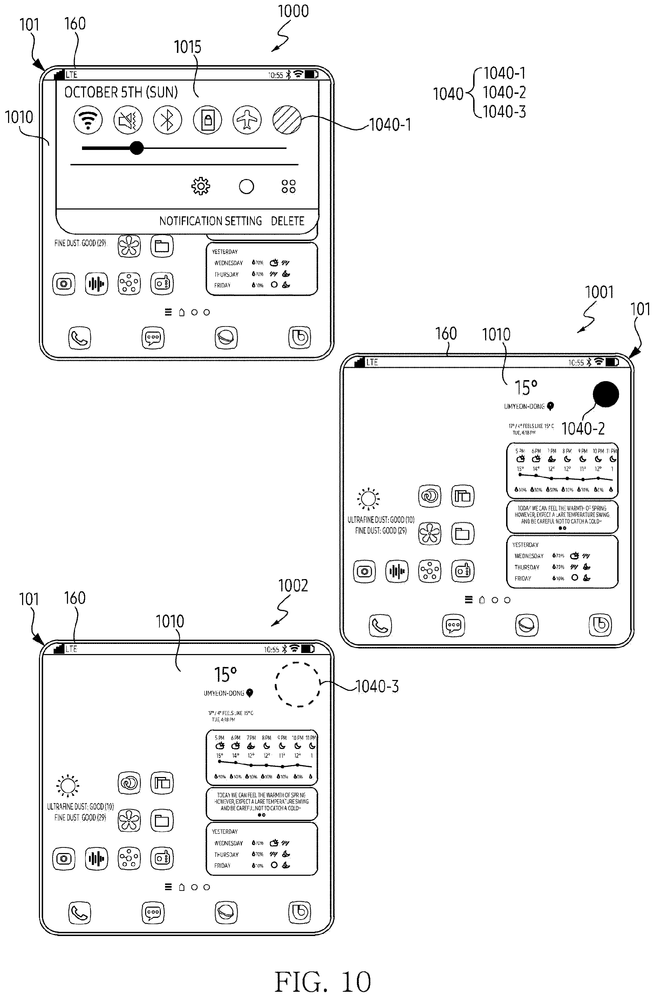

Referring to the example 201, the first screen 210 may include a visual object 240 for displaying the first screen 210 and a second screen 220 for a second SIM different from the first SIM. For example, the processor 120 may concurrently display the first screen 210 and the visual object 240 included in the first screen 210 via a display region of the display 160. For example, the processor 120 may display the first screen 210 and the visual object 240 superimposed on the first screen 210. For example, the visual object 240 may be displayed on a software application for displaying a home screen that controls at least another software application to be executable. However, an embodiment of the present disclosure is not limited thereto. For example, the visual object 240 may be displayed on a pop-up window (or a quick panel) displayed in response to at least one user input for the display 160. In addition, for example, the visual object 240 may be positioned in a designated region in the display region of the display 160, and the visual object 240 may be set to refrain from being viewed from the outside based on an alpha value. The alpha value may represent transparency of the visual object 240. A specific detail related thereto is described in FIG. 10 below.

For example, the processor 120 may identify an input for the visual object 240. For example, the processor 120 may identify at least one user input for the visual object 240. For example, the user input may include a touch input. In addition, the processor 120 may identify an input for the visual object 240 using a designated gesture. For example, the processor 120 may identify an input for the visual object 240 by using the designated gesture representing an operation of shaking the electronic device 101 n times.

Although not illustrated in the example 201, the processor 120 may identify that a plurality of SIMs is set. For example, the processor 120 may identify whether a pSIM is inserted and whether an eSIM is set. In response to identifying that the plurality of SIMs is set, the processor 120 may activate a function of concurrently displaying the second screen 220 for the second SIM and the first screen 210 via a software application with respect to the visual object 240. In case that the function is activated, the processor 120 may display the first screen 210 and the second screen 220 via the display 160 by identifying the input for the visual object 240.

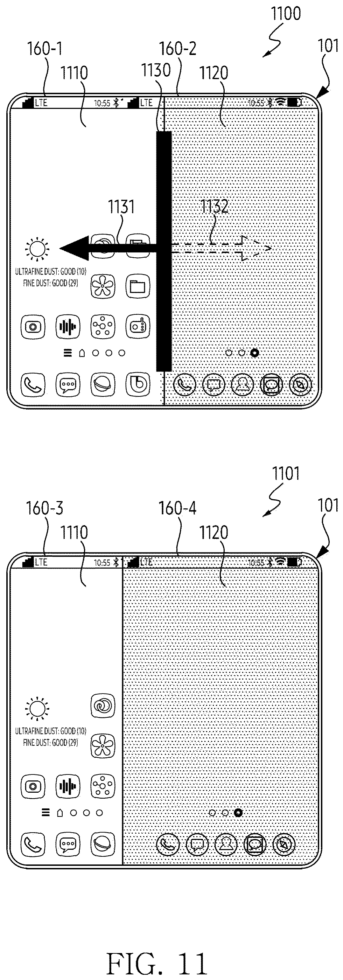

Referring to an example 202, in response to identifying the input for the visual object 240, the processor 120 may display the first screen 210 in a first partial region 160-1 in the display region of the display 160, and display the second screen 220 in a second partial region 160-2 in the display region of the display 160. The first partial region 160-1 and the second partial region 160-2 may be included in the display region of the display 160. For example, a default size of the first partial region 160-1 may be set to be the same as a size of the second partial region 160-2. However, an embodiment of the present disclosure is not limited thereto, and the default size of the first partial region 160-1 may be set to be different from the size of the second partial region 160-2. In addition, a size of the first partial region 160-1 may be changed. For example, the size of the first partial region 160-1 may be reduced or expanded, and accordingly, the size of the second partial region 160-2 may be expanded or reduced. A specific detail related thereto is described in FIG. 11.

For example, in response to identifying the input for the visual object 240, the processor 120 may cease displaying the visual object 240. For example, in case that the visual object 240 is displayed on the software application for displaying the home screen, the processor may cease displaying the visual object 240 in response to identifying the input.

For example, the second screen 220 may include a second set of visual object for displaying a second software application different from the first set of software application. For example, the second set of software application may include the software application that provides the call function. The software application that provides the call function for the second SIM may execute a function of outputting second acoustic data for notifying reception of a call. The second acoustic data may be set differently from the first acoustic data. In addition, the second set of software application may be set based on a second theme. The theme may represent a set of resources that may be applied to the style and layout of the software application. The second theme may be set differently from the first theme. For example, the second screen 220, the second set of software application related to the second SIM, and a setting (e.g., acoustic data, theme) of the second set of software application may be included in the setting of the electronic device 101. The second set of software application related to the second SIM and the second screen 220 for displaying the same may be set based on second configuration information. The second configuration information for the second SIM may be set differently from the first configuration information for the first SIM, but at least a portion of the second configuration information may be set to be the same as the first configuration information.

For example, the processor 120 may set the setting of the electronic device 101 for the first screen 210 displayed in the first partial region 160-1 based on the first configuration information related to the first SIM and may set the setting of the electronic device 101 for the second screen 220 displayed in the second partial region 160-2 based on the second configuration information related to the second SIM. For example, the setting of the electronic device 101 for the first screen 210 may be applied to the first set of software application related to the first SIM and a screen (e.g., the first partial region 160-1) for displaying the same. For example, the setting of the electronic device 101 for the second screen 160-2 may be applied to the second set of software application related to the second SIM and a screen (e.g., the second partial region 160-2) for displaying the same. For example, the processor 120 may identify a user input for the first partial region 160-1 or the second partial region 160-2. In response to identifying the user input for the first partial region 160-1 or the second partial region 160-2, the processor 120 may set another setting (e.g., acoustic data when receiving a call) other than the setting of the electronic device 101 displayed via the display region 160 of the display based on SIM-related configuration information corresponding to the identified user input.

Comparing the example 201 and the example 202, a layout for the first set of software application of the first screen 210 may be changed. For example, in case of the example 201, the first screen 210 is displayed on a relatively wider display region of the display 160, but in case of the example 202, as the first screen 210 is displayed on the relatively narrower first partial region 160-1, the layout may be changed. For example, the change in the layout may include a gap between software applications in the first set being narrowed, a disposition of software applications in the first set being changed, a size of software application in the first set being reduced, or the number of page indicators for the software application in the first set being increased.

Referring to an example 203, the processor 120 may identify a user input for moving a boundary 230. For example, the processor 120 may identify a user input for moving the boundary 230 toward a first direction 231 or a second direction 232. For example, a user input for moving the boundary 230 toward a direction may include a swipe (or a scroll). For example, the processor 120 may identify a user input representing moving the boundary 230 toward the first direction 231. For example, the first direction 231 may represent a left direction when viewed in reference to a vertical direction of the display 160. The second direction 232 may represent a direction opposite to the first direction 231. For example, the second direction 232 may represent a right direction when viewed in reference to a vertical direction of the display 160.

For example, the processor 120 may change the size of the first partial region 160-1 in which the first screen 210 is displayed and display it based on the user input for the boundary 230. For example, based on the user input representing moving the boundary 230 toward the first direction 231, the processor 120 may reduce the size of the first partial region 160-1 and may display the first screen 210 via the first partial region 160-1 of the reduced size. Accordingly, the processor 120 may change the size of the second partial region 160-2 and display it. For example, the processor 120 may display the second screen 220 via the second partial region 160-2 having a size expanded by the reduced size of the first partial region 160-1. The above-described example describes a case of moving the boundary 230 toward the first direction 231, and in contrast, in case that the boundary 230 is moved toward the second direction 232 based on the user input, the size of the first partial region 160-1 may be expanded and the size of the second partial region 160-2 may be reduced.

Referring to an example 204, the processor 120 may identify whether a value representing a changed size of the second partial region 160-2 (or the first partial region 160-1) according to the user input for the boundary 230 is greater than a reference value. For example, in case that the value representing the changed size of the second partial region 160-2 is greater than the reference value, based on at least a portion of the user input representing moving the boundary 230 toward the first direction 231, the processor 120 may display the second screen 220 in the display region of the display 160 as in the example 204.

For example, in case that a value representing a changed size of the first partial region 160-1 is greater than the reference value, based on at least a portion of the user input representing moving the boundary 230 toward the second direction 232, the processor 120 may display the first screen 210 in the display region of the display 160 as in the example 201. For example, the reference value may be set by a user for each SIM. In addition, the reference value may be set by the user according to a state (e.g., horizontal or vertical) in which the display 160 identified based on a sensor (e.g., the sensor module 176 of FIG. 1) of the electronic device 101 is placed. Although not illustrated in FIG. 2, the processor 120 may resume a display of the visual object 240, with respect to the visual object 240 that is ceased to display in the example 201. For example, in case of displaying again the first screen 210 in the display region of the display 160, after displaying the first screen 210 and the second screen 220 in response to the input for the visual object 240 in the example 201, the processor 120 may resume the display of the visual object 240 superimposed on the first screen 210.

Referring to the example 204, the processor 120 may display the second screen 220. For example, the second screen 220 may include the visual object 240 for displaying the first screen 210 for the first SIM and the second screen 220. For example, the processor 120 may display the second screen 220 and the visual object 240 included in the second screen 220 via the display region of the display 160. For example, the processor 120 may display the second screen 220 and the visual object 240 superimposed on the second screen 220. For example, the visual object 240 may be displayed on the software application for displaying the home screen that controls at least another software application to be executable. However, an embodiment of the present disclosure is not limited thereto. For example, the visual object 240 may be displayed on the pop-up window (or the quick panel) displayed in response to at least one user input for the display 160. In addition, for example, the visual object 240 may be positioned in the designated region in the display region of the display 160, and the visual object 240 may be set to refrain from being viewed from the outside based on the alpha value. The alpha value may represent transparency of the visual object 240. A specific detail related thereto is described in FIG. 10 below.

Comparing the example 203 and the example 204, a layout for the second set of software application of the second screen 220 may be changed. For example, in case of the example 203, the second screen 220 is displayed on the relatively narrower second partial region 160-2, but in case of the example 204, as the second screen 220 is displayed on the relatively wider display region of the display 160, the layout may be changed. For example, the change in the layout may include a gap between software applications in the second set being widened, a disposition of software applications in the second set being changed, a size of software application in the second set being expanded, or the number of page indicators for the software application in the second set being reduced.

Referring to the above description, a device and a method using a dual mode according to embodiments of the present disclosure may display a plurality of screens for a plurality of SIMs via partial regions of the display. The device and the method using the dual mode according to embodiments of the present disclosure may use a visual object for displaying the plurality of screens for the plurality of SIMs in partial regions of the display. The device and the method using the dual mode according to embodiments of the present disclosure may provide a more intuitive dual mode-based service to a user by displaying screens set differently for each of the plurality of SIMs. Accordingly, the user may effectively use the plurality of SIMs via one electronic device. For example, the user may use some of SIMs for a work purpose and other some of SIMs for a personal purpose.

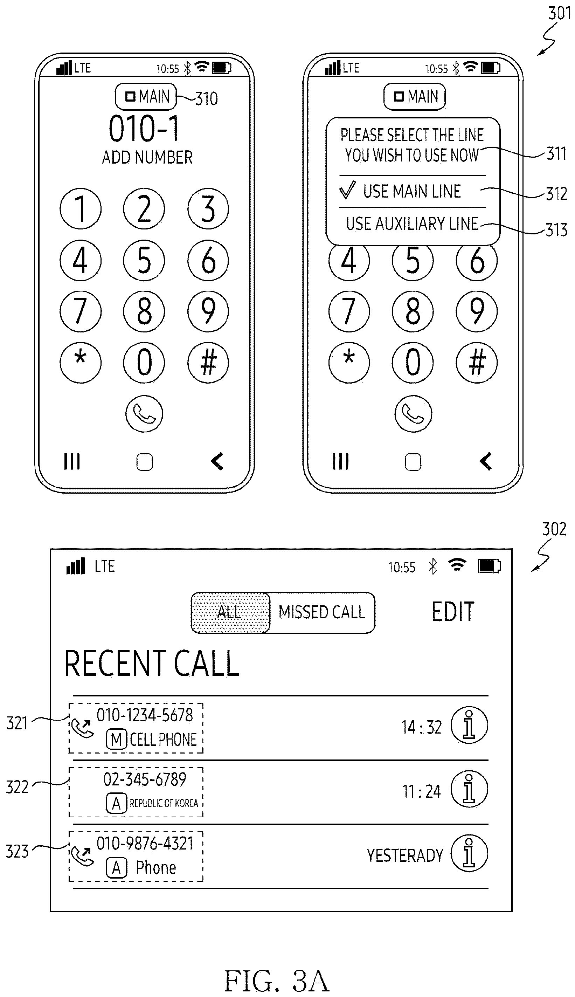

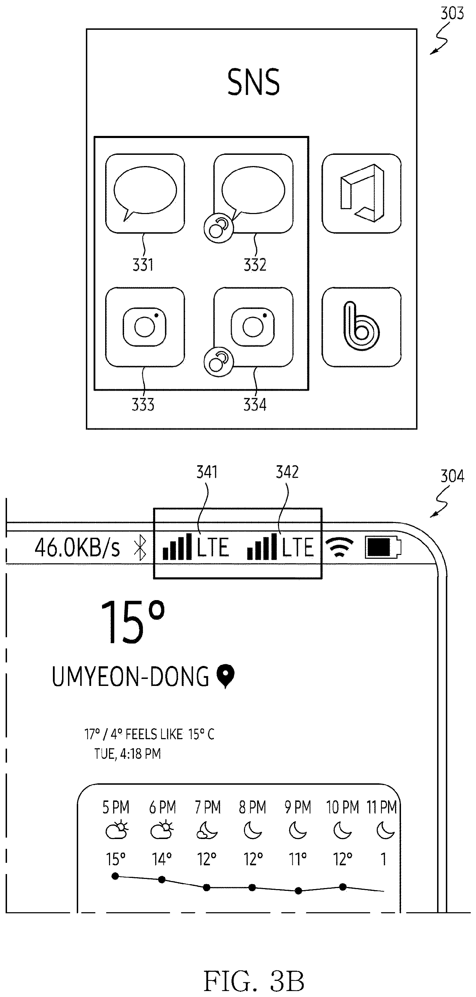

FIGS. 3A and 3B illustrate examples of an electronic device that provides a dual subscriber identity module (SIM) service.

A dual SIM service of FIGS. 3A and 3B represents a service that provides two SIMs (dual SIMs) via one electronic device.

FIG. 3A illustrates an example 301 and an example 302 for executing a call function in an electronic device using dual SIMs. Referring to the example 301, the electronic device may display visual objects for the call function via a software application for the call function. The visual objects may include a visual object 310 representing a line for performing the call function. For example, the visual object 310 of a left drawing of the example 301 may display a main line, and the main line may correspond to a specific SIM. Referring to a right drawing of the example 301, based on an input for the visual object 310 or an input for a visual object representing a start of a call for an input number, a visual object 311 representing a line to be used may be displayed. The visual object 311 may include a visual object 312 representing a main line and the visual object 313 representing an auxiliary line. The electronic device may, in response to an input for the visual object 312 or the visual object 313, perform a call with an external electronic device using a corresponding line and SIM.

In addition, referring to the example 302, the electronic device may display visual objects representing a call record via a software application for displaying the call record. For example, the electronic device may display a visual object 321 for a first call record, a visual object 322 for a second call record, and a visual object 323 for a third call record. For example, the visual object 321 may represent a record of a call via a main line. The visual object 322 and the visual object 323 may represent a record of a call via an auxiliary line.

Referring to the above description, in case that one electronic device provides a service via dual SIMs, there may be an inconvenience in having to select a line (or SIM) whenever performing a call, as in the example 301 and the example 302. In addition, in case that visual objects are displayed as in the example 302, it may be difficult for a user to intuitively identify via which line the call function was executed.

FIG. 3B illustrates an example 303 and an example 304 of displaying visual objects representing software applications and a specific state in an electronic device using dual SIMs.

Referring to the example 303, an electronic device may display visual objects 331, 332, 333, and 334 representing software applications for providing a social network service via a display. The visual object 331 may represent a first software application for a first SIM, the visual object 332 may represent a first software application for a second SIM, the visual object 333 may represent a second software application for the first SIM, and the visual object 334 may represent a second software application for the second SIM. The electronic device may use the visual object 331 and the visual object 332 that is partially changed from the visual object 331 for displaying the first software application for the first SIM and the second SIM. In addition, the electronic device may use the visual object 333 and the visual object 334 that is partially changed from the visual object 333 for displaying the second software application for the first SIM and the second SIM. Referring to the example 304, the electronic device may display a visual object 341 for displaying a connected network based on the first SIM and a visual object 342 for displaying a connected network based on the second SIM. The visual object 341 may be concurrently displayed with the visual object 342.

Referring to the above description, when displaying a visual object representing the same software application or a visual object representing a specific state for a plurality of SIMs, the electronic device may concurrently display similar visual objects or the same visual objects. Accordingly, it may be difficult for a user of the electronic device to distinguish between software applications corresponding to different SIMs.

When referring to FIGS. 2, 3A, and 3B, a device and a method using a dual mode according to embodiments of the present disclosure may provide a more intuitive user experience by using a visual object for displaying a plurality of screens for a plurality of SIMs. In addition, according to the device and the method using the dual mode according to embodiments of the present disclosure, a user may individually set a screen for each SIM, thereby intuitively using a plurality of SIMs in one electronic device. Hereinafter, a method of providing a dual mode for dual SIMs is described.

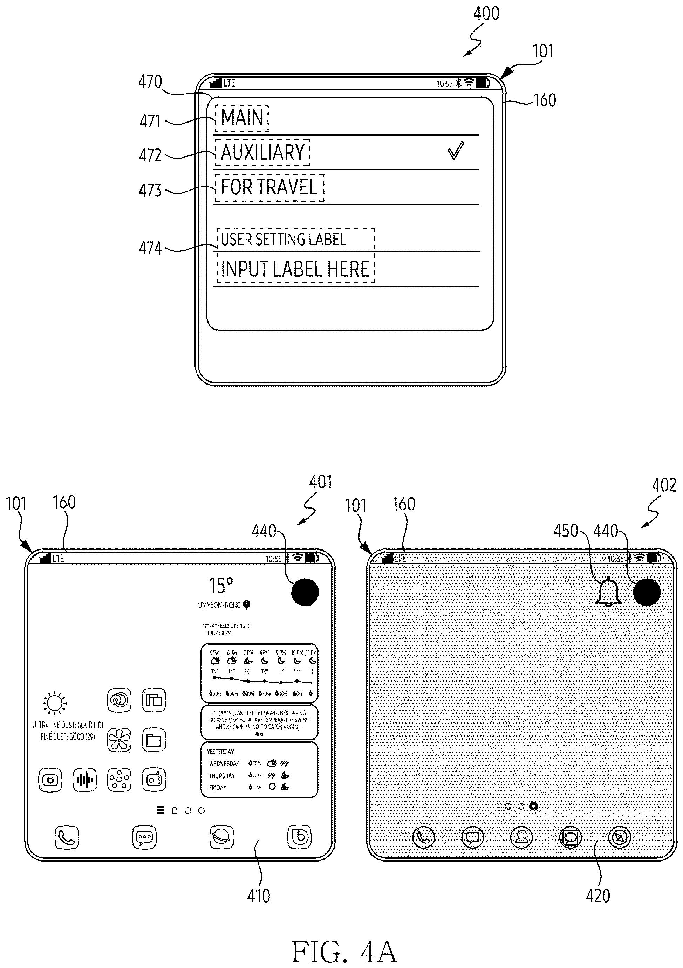

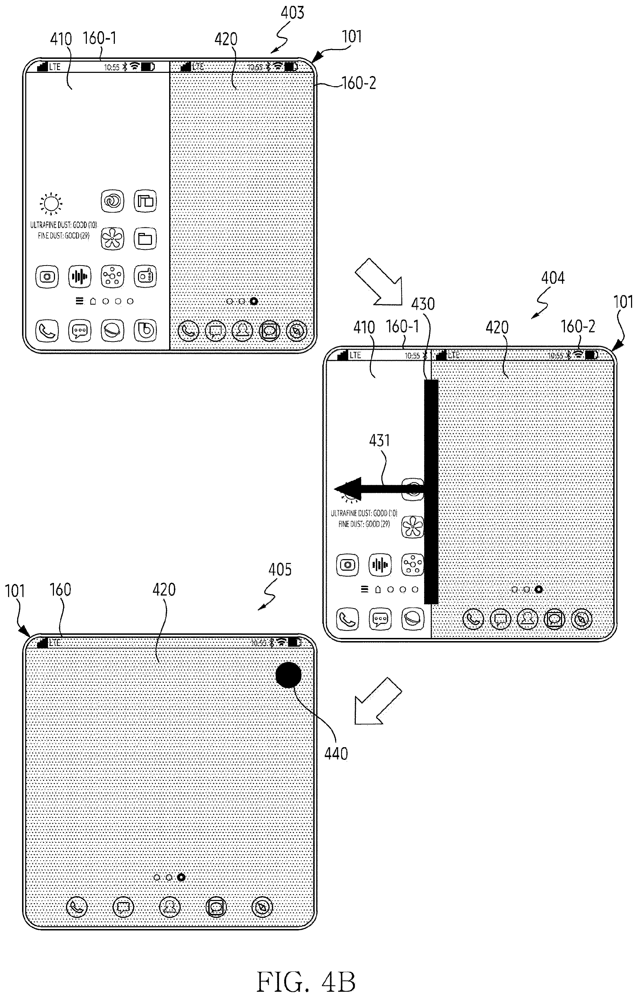

FIGS. 4A and 4B illustrate an example of a method of providing a dual mode according to an embodiment of the present disclosure.

Although FIGS. 4A and 4B illustrate an example of an electronic device 101 using a dual mode for two SIMs (dual SIMs) for convenience of explanation, an embodiment of the present disclosure is not limited thereto. For example, an embodiment of the present disclosure may include the electronic device 101 using a dual mode for three or more SIMs. The SIM may include a physical SIM (pSIM) and an embedded SIM (eSIM).

The electronic device 101 of FIGS. 4A and 4B may include some or all of components of the electronic device 101 of FIG. 1. For example, the electronic device 101 of FIGS. 4A and 4B may include the processor 120 of FIG. 1. The electronic device 101 of FIGS. 4A and 4B may include a foldable type terminal or a bar type terminal.

Referring to FIG. 4A, although not illustrated in an example 400, the processor 120 may identify that a plurality of SIMs is set. For example, the processor 120 may identify whether a pSIM is inserted and whether an eSIM is set. In response to identifying that the plurality of SIMs is set, the processor 120 may activate a function of concurrently displaying a first screen for a first SIM and a second screen for a second SIM.

Referring to the example 400, the processor 120 may display a screen 470 for selecting two SIMs to be applied to a dual mode among a plurality of SIMs via a display. The screen 470 may include a visual object 471 for displaying a main SIM, a visual object 472 for displaying an auxiliary SIM, a visual object 473 for displaying a SIM for a separate purpose (e.g., travel), and a visual object 474 for defining a label for each visual object. In case that the function is activated by identifying that the plurality of SIMs are set, the processor 120 may receive an input for the visual objects 471, 472, and 473 in the screen 470 for selecting two SIMs to be applied to the dual mode among the plurality of SIMs. For example, in response to identifying an input for the visual object 471 for selecting the main SIM and an input for the visual object 472 for selecting the auxiliary SIM, the processor 120 may identify SIMs to be applied to the dual mode.

Referring to an example 401, the processor 120 may display a first screen 410 via a display 160. For example, the first screen 410 may represent a screen for a first SIM set in the electronic device 101. The first screen 410 may include a first set of visual object for displaying a first set of software application. For example, the first set of software application may include a software application that provides a call function. The software application that provides the call function for the first SIM may execute a function of outputting first acoustic data for notifying reception of a call. In addition, the first set of software application may be set based on a first theme. The theme may represent a set of resources that may be applied to a style and a layout of the software application. For example, the first theme may include a black theme and a white theme. For example, the first screen 410, the first set of software application related to the first SIM, and a setting (e.g., acoustic data, theme) of the first set of software application may be included in a setting of the electronic device 101. The first set of software application related to the first SIM and the first screen 410 for displaying the same may be set based on first configuration information.

Referring to the example 401, the first screen 410 may include a visual object 440 for displaying the first screen 410 and a second screen 420 for a second SIM different from the first SIM. For example, the processor 120 may concurrently display the first screen 410 and the visual object 440 included in the first screen 410 via a display region of the display 160. For example, the processor 120 may display the first screen 410 and the visual object 440 superimposed on the first screen 410. For example, the visual object 440 may be displayed on a software application for displaying a home screen that controls at least another software application to be executable. However, an embodiment of the present disclosure is not limited thereto. For example, the visual object 440 may be displayed on a pop-up window (or a quick panel) displayed in response to at least one user input for the display 160. In addition, for example, the visual object 440 may be positioned in a designated region in the display region of the display 160, and the visual object 440 may be set to refrain from being viewed from the outside based on an alpha value. The alpha value may represent transparency of the visual object 440. A specific detail related thereto is described in FIG. 10 below.

For example, the processor 120 may identify an input for the visual object 440. For example, the processor 120 may identify at least one user input for the visual object 440. For example, the user input may include a touch input. Or, the processor 120 may identify an input for the visual object 440 using a designated gesture. For example, the processor 120 may identify an input for the visual object 440 by using the designated gesture representing an operation of shaking the electronic device 101 n times.

Referring to an example 402, the processor 120 may display the second screen 420 via the display 160. For example, the second screen 420 may represent a screen for the second SIM set in the electronic device 101. For example, the second screen 420 may include a second set of visual object for displaying a second software application different from the first set of software application. For example, the second set of software application may include the software application that provides the call function. The software application that provides the call function for the second SIM may execute the function of outputting second acoustic data for notifying reception of a call. The second acoustic data may be set differently from the first acoustic data. In addition, the second set of software application may be set based on a second theme. The theme may represent a set of resources that may be applied to the style and layout of the software application. The second theme may be set differently from the first theme. For example, the second screen 420, the second set of software application related to the second SIM, and a setting (e.g., acoustic data, theme) of the second set of software application may be included in the setting of the electronic device 101. The second set of software application related to the second SIM and the second screen 420 for displaying the same may be set based on second configuration information. The second configuration information for the second SIM may be set differently from the first configuration information for the first SIM, but at least a portion of the second configuration information may be set to be the same as the first configuration information.

Referring to the example 402, the processor 120 may display the second screen 420 including the visual object 440. For example, the second screen 420 may include the visual object 440 for displaying the second screen 420 and the first screen 410. For example, the processor 120 may display the visual object 440 included in the second screen 420 and the first screen 410 via the display region of the display 160. For example, the processor 120 may display the second screen 420 and the visual object 440 superimposed on the second screen 420. For example, the visual object 440 may be displayed on the software application for displaying a home screen that controls at least another software application to be executable. However, an embodiment of the present disclosure is not limited thereto. For example, the visual object 440 may be displayed on the pop-up window (or the quick panel) displayed in response to at least one user input for the display 160. In addition, for example, the visual object 440 may be positioned in the designated region in the display region of the display 160, and the visual object 440 may be set to refrain from being viewed from the outside based on the alpha value. The alpha value may represent transparency of the visual object 440. A specific detail related thereto is described in FIG. 10 below.

Referring to the example 402, the processor 120 may display the second screen 420 including a visual object 450 for displaying notification information for the first SIM via the display region of the display 160. For example, while providing a second SIM service via the second screen 420, the processor 120 may identify a designated event (e.g., reception of a message for the first SIM) for the first SIM. In case of identifying the designated event for the first SIM, the processor 120 may display the visual object 450 for displaying the notification information for the first SIM. For example, the second screen 420 may include the visual object 450 for displaying the notification information for the first SIM, and the visual object 450 may be concurrently displayed with the visual object 440. The processor 120 may display a visual object displaying the notification information in response to an input for the visual object 450. For example, the visual object displaying the notification information may pop-up from the visual object 450 or may be floated on the visual object 450.

Although not illustrated in the example 401, as in the example 402, the processor 120 may display the first screen 410 including the visual object 450 for displaying notification information for the second SIM via the display region of the display 160. For example, while providing a first SIM service via the first screen 410, the processor 120 may identify a designated event (e.g., reception of a message for the second SIM) for the second SIM. In case of identifying the designated event for the second SIM, the processor 120 may display the visual object 450 for displaying the notification information for the second SIM. For example, the first screen 410 may include the visual object 450 for displaying the notification information for the second SIM, and the visual object 450 may be concurrently displayed with the visual object 440 of the example 401. The processor 120 may display a visual object displaying the notification information in response to an input for the visual object 450. For example, the visual object displaying the notification information may pop-up from the visual object 450 or may be floated on the visual object 450.

Referring to an example 403 in FIG. 4B, in response to identifying the input for the visual object 440 of the example 401 or the example 402, the processor 120 may display a first screen 410 in a first partial region 160-1 in the display region of the display 160, and display the second screen 420 in a second partial region 160-2 in the display region of the display 160. The first partial region 160-1 and the second partial region 160-2 may be included in the display region of the display 160. For example, a default size of the first partial region 160-1 may be set to be the same as a size of the second partial region 160-2. However, an embodiment of the present disclosure is not limited thereto, and the default size of the first partial region 160-1 may be set to be different from the size of the second partial region 160-2. In addition, a size of the first partial region 160-1 may be changed. For example, the size of the first partial region 160-1 may be reduced or expanded, and accordingly, the size of the second partial region 160-2 may be expanded or reduced. A specific detail related thereto is described in FIG. 11.

For example, the processor 120 may set a setting of the electronic device 101 for the first screen 410 displayed in the first partial region 160-1 based on first configuration information related to a first SIM and may set the setting of the electronic device 101 for the second screen 420 displayed in the second partial region 160-2 based on second configuration information related to a second SIM. For example, the setting of the electronic device 101 for the first screen 410 may be applied to a first set of software application related to the first SIM and a screen (e.g., the first partial region 160-1) for displaying the same. For example, the setting of the electronic device 101 for the second screen 160-2 may be applied to a second set of software application related to the second SIM and a screen (e.g., the second partial region 160-2) for displaying the same. For example, the processor 120 may identify a user input for the first partial region 160-1 or the second partial region 160-2. In response to identifying the user input for the first partial region 160-1 or the second partial region 160-2, the processor 120 may set another setting (e.g., acoustic data when receiving a call) other than the setting of the electronic device 101 represented via the display region 160 of the display based on SIM-related configuration information corresponding to the identified user input.

Comparing the example 401 (or the example 402) and the example 403, a layout for the first set of software application of the first screen 410 may be changed. For example, in case of the example 401, the first screen 410 is displayed on a relatively wider display region of the display 160, but in case of the example 403, as the first screen 410 is displayed on the relatively narrower first partial region 160-1, the layout may be changed. For example, the change in the layout may include a gap between software applications in the first set being narrowed, a disposition of software applications in the first set being changed, a size of software application in the first set being reduced, or the number of page indicators for the software application in the first set being increased.

Referring to the example 403, in response to identifying the input for the visual object 440, the processor 120 may cease displaying the visual object 440. For example, in case that the visual object 440 is displayed on the software application for displaying the home screen, the processor may cease displaying the visual object 440 in response to identifying the input.

Referring to an example 404, the processor 120 may identify a user input for moving a boundary 430. For example, the processor 120 may identify a user input for moving the boundary 430 toward a first direction 431 or a second direction (not illustrated). For example, a user input for moving the boundary 430 toward a direction may include a swipe (or a scroll). For example, the processor 120 may identify a user input representing moving the boundary 430 toward the first direction 431. For example, the first direction 431 may represent a left direction when viewed in reference to a vertical direction of the display 160. The second direction may represent a direction opposite to the first direction 431. For example, the second direction may represent a right direction when viewed in reference to a vertical direction of the display 160.

For example, the processor 120 may change the size of the first partial region 160-1 in which the first screen 410 is displayed and display it based on the user input for the boundary 430. For example, based on the user input representing moving the boundary 430 toward the first direction 431, the processor 120 may reduce the size of the first partial region 160-1 and may display the first screen 410 via the first partial region 160-1 of the reduced size. Accordingly, the processor 120 may change the size of the second partial region 160-2 and display it. For example, the processor 120 may display the second screen 420 via the second partial region 160-2 having a size expanded by the reduced size of the first partial region 160-1. The above-described example describes a case of moving the boundary 430 toward the first direction 431, and in contrast, in case that the boundary 430 is moved toward the second direction (not illustrated) based on the user input, the size of the first partial region 160-1 may be expanded and the size of the second partial region 160-2 may be reduced.

Referring to an example 405, the processor 120 may identify whether a value representing the changed size of the second partial region 160-2 (or the first partial region 160-1) according to the user input for the boundary 430 is greater than a reference value. For example, in case that the value representing the changed size of the second partial region 160-2 is greater than the reference value, based on at least a portion of the user input representing moving the boundary 430 toward the first direction 431, the processor 120 may display the second screen 420 in the display region of the display 160 as in the example 405. For example, in case that a value representing a changed size of the first partial region 160-1 is greater than the reference value, based on at least a portion of the user input representing moving the boundary 430 toward the second direction, the processor 120 may display the first screen 410 in the display region of the display 160 as in the example 401. For example, the reference value may be set by a user for each SIM. In addition, the reference value may be set by the user according to a state (e.g., horizontal or vertical) in which the display 160 identified based on a sensor (e.g., the sensor module 176 of FIG. 1) of the electronic device 101 is placed.

Referring to the example 405, the processor 120 may display the second screen 420. For example, the processor 120 may not display the first screen 410 while displaying the second screen 420 via the display region of the display 160. The processor 120 may identify the second SIM based on the user input for the boundary 430, and may display only the second screen 420, which is a screen for the second SIM, via the display region of the display 160 by identifying that the user input is greater than or equal to the reference value. For example, the second screen 420 may include the visual object 440 for displaying the first screen 410 for the first SIM and the second screen 420. For example, the processor 120 may display the second screen 420 and the visual object 440 included in the second screen 420 via the display region of the display 160. For example, the processor 120 may display the second screen 420 and the visual object 440 superimposed on the second screen 420. For example, the visual object 440 may be displayed on the software application for displaying the home screen that controls at least another software application to be executable. However, an embodiment of the present disclosure is not limited thereto. For example, the visual object 440 may be displayed on the pop-up window (or the quick panel) displayed in response to at least one user input for the display 160. In addition, for example, the visual object 440 may be positioned in the designated region in the display region of the display 160, and the visual object 440 may be set to refrain from being viewed from the outside based on the alpha value. The alpha value may represent transparency of the visual object 440. A specific detail related thereto is described in FIG. 10 below.

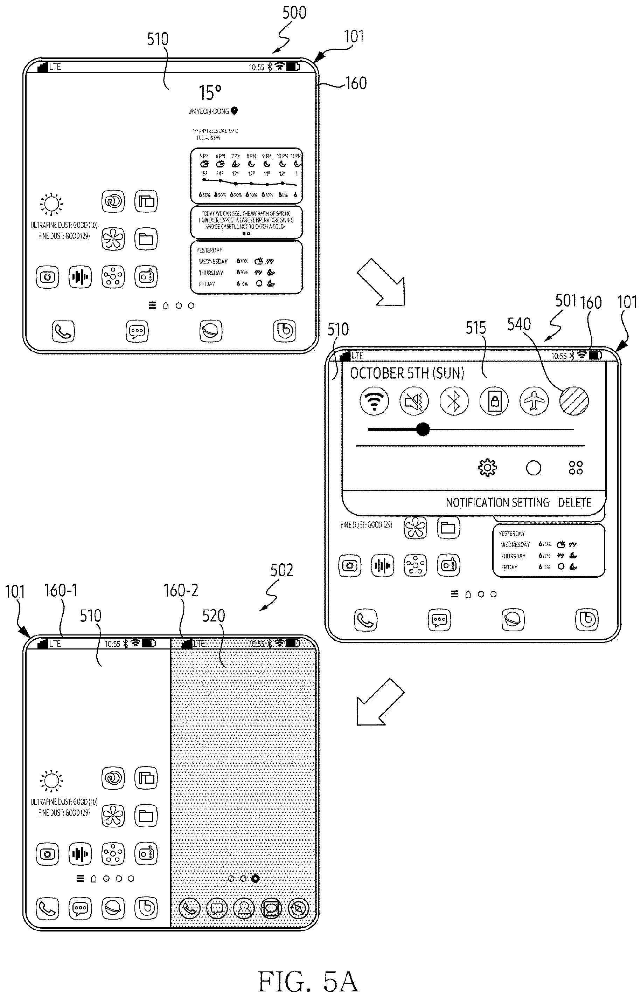

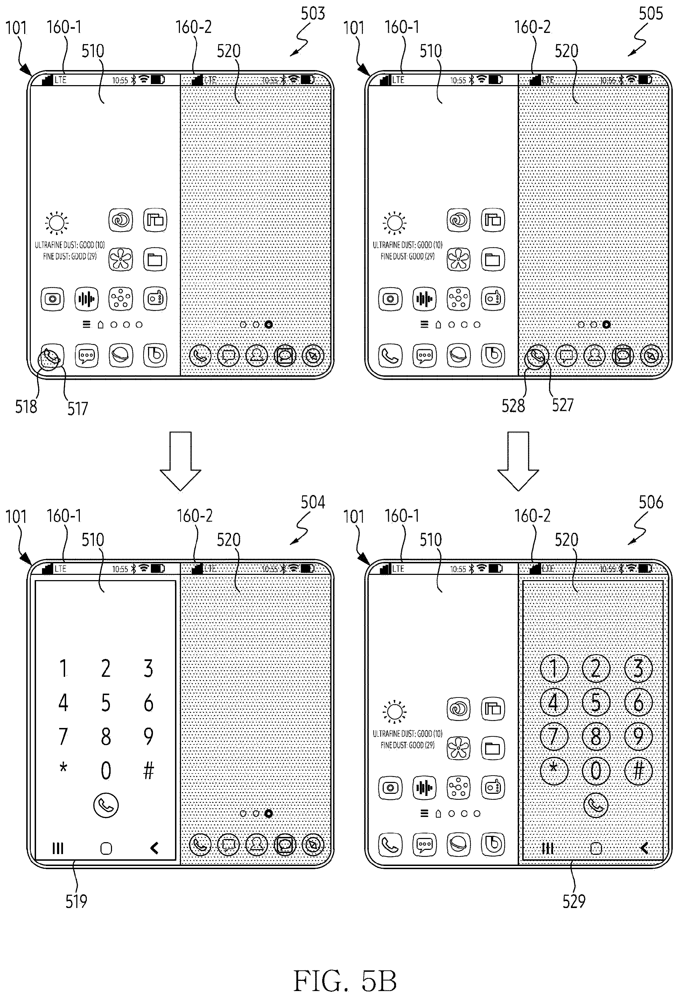

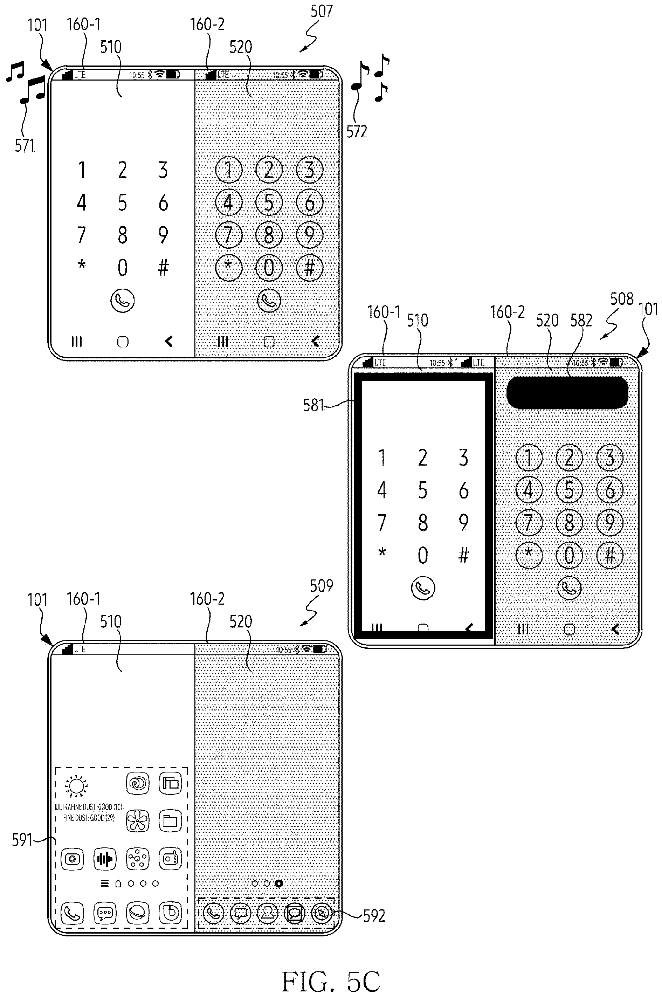

FIGS. 5A to 5C illustrate examples of providing a dual SIM service based on a dual mode according to an embodiment of the present disclosure.

Although FIGS. 5A to 5C illustrate an example of an electronic device 101 using a dual mode for two SIMs (dual SIMs) for convenience of explanation, an embodiment of the present disclosure is not limited thereto. For example, an embodiment of the present disclosure may include the electronic device 101 using a dual mode for three or more SIMs. The SIM may include a physical SIM (pSIM) and an embedded SIM (eSIM).

The electronic device 101 of FIGS. 5A to 5C may include some or all of components of the electronic device 101 of FIG. 1. For example, the electronic device 101 of FIGS. 5A to 5C may include the processor 120 of FIG. 1. The electronic device 101 of FIGS. 5A to 5C may include a foldable type terminal or a bar type terminal.

Referring to an example 500, the processor 120 may display a first screen 510 via a display 160. For example, the first screen 510 may represent a screen for a first SIM set in the electronic device 101. The first screen 510 may include a first set of visual object for displaying a first set of software application. For example, the first set of software application may include a software application that provides a call function. The software application that provides the call function for the first SIM may execute a function of outputting first acoustic data for notifying reception of a call. In addition, the first set of software application may be set based on a first theme. The theme may represent a set of resources that may be applied to a style and a layout of the software application. For example, the first theme may include a black theme and a white theme. For example, the first screen 510, the first set of software application related to the first SIM, and a setting (e.g., acoustic data, theme) of the first set of software application may be included in a setting of the electronic device 101. The first set of software application related to the first SIM and the first screen 510 for displaying the same may be set based on first configuration information.

Referring to an example 501, the first screen 510 may include a visual object 540 for displaying a second screen 520 for a second SIM different from the first SIM. Unlike the example 401 of FIG. 4A, in which the first screen 410 includes the visual object 440 via a software application for displaying a home screen, the first screen 510 of the example 501 may include the visual object 540 on a pop-up window (or a quick panel) 515. For example, the pop-up window (or the quick panel) 515 may be displayed in response to at least one user input for a portion (e.g., an upper end portion) of the display 160. The at least one user input may include a swipe or a scroll.

Referring to an example 502, in response to identifying an input for the visual object 540 of the example 501, the processor 120 may display the first screen 510 in a first partial region 160-1 in a display region of the display 160, and display the second screen 520 in a second partial region 160-2 in the display region of the display 160. The first partial region 160-1 and the second partial region 160-2 may be included in the display region of the display 160. For example, a default size of the first partial region 160-1 may be set to be the same as a size of the second partial region 160-2. However, an embodiment of the present disclosure is not limited thereto, and the default size of the first partial region 160-1 may be set to be different from the size of the second partial region 160-2. In addition, a size of the first partial region 160-1 may be changed. For example, the size of the first partial region 160-1 may be reduced or expanded, and accordingly, the size of the second partial region 160-2 may be expanded or reduced. A specific detail related thereto is described in FIG. 11.

Comparing the example 501 and the example 502, a layout for the first set of software application of the first screen 510 may be changed. For example, in case of the example 501, the first screen 510 is displayed on a relatively wider display region of the display 160, but in case of the example 502, as the first screen 510 is displayed on the relatively narrower first partial region 160-1, the layout may be changed. For example, the change in the layout may include a gap between software applications in the first set being narrowed, a disposition of software applications in the first set being changed, a size of software application in the first set being reduced, or the number of page indicators for the software application in the first set being increased.

Referring to an example 503, the processor 120 may identify an input 518 for a visual object 517 representing a software application for a call function in the first screen 510. For example, the processor 120 may identify the at least one user input 518 for the visual object 517. Referring to an example 504, in response to identifying the input 518, the processor 120 may display the first screen 510 representing a screen 519 for the call function via the first partial region 160-1. Referring to the example 503 and the example 504, even if contents displayed on the first screen 510 are changed according to the input 518 for the first screen 510, content displayed on the second screen 520 may be maintained. For example, the processor 120 may change the first screen 510 based on identifying the input 518 for the first screen 510 and may maintain the divided second screen 520.

In contrast, referring to an example 505, the processor 120 may identify an input 528 for a visual object 527 representing a software application for a call function in the second screen 520. For example, the processor 120 may identify the at least one user input 528 for the visual object 527. Referring to an example 506, in response to identifying the input 528, the processor 120 may display the second screen 520 representing a screen 529 for the call function via the second partial region 160-2. Referring to the example 505 and the example 506, even if contents displayed on the second screen 520 are changed according to the input 528 for the second screen 520, content displayed on the first screen 510 may be maintained. For example, the processor 120 may change the second screen 520 based on identifying the input 518 for the second screen 520 and may maintain the divided first screen 510.

Referring to examples 507, 508, and 509, the processor 120 may set the first screen 510 for the first SIM and the second screen 520 for the second SIM differently. Referring to the example 507, in case of receiving a call via the software application for the call function related to the first screen 510, the processor 120 may output first acoustic data 571 for notifying the reception of the call. In contrast, when receiving a call via the software application for the call function related to the second screen 520, the processor 120 may output second acoustic data 572 for notifying the reception of the call. For example, the second acoustic data 572 may be set differently from the first acoustic data 571.

Referring to the example 508, the processor 120 may display the first screen 510 including a visual object 581 in an edge lighting manner for representing notification information. In contrast, the processor 120 may display the second screen 520 including a visual object 582 in a pop-up manner via an upper end portion of the second partial region 160-2 for representing notification information.

Referring to the example 509, the processor 120 may display the first screen 510 including a first set of software application 591 via the first partial region 160-1. For example, the first set of software applications 591 may be displayed via a four-column-based arrangement format. In contrast, the processor 120 may display a second set of software application 592 via the second partial region 160-2. For example, the second set of software application 592 may be displayed via a five-column-based arrangement format.

Although the examples 507, 508, and 509 illustrate setting the first screen 510 for the first SIM and the second screen 520 for the second SIM differently, embodiments of the present disclosure are not limited thereto. For example, at least a portion of the first configuration information for setting the first screen 510 may be set to be the same as second configuration information for setting the second screen 520.

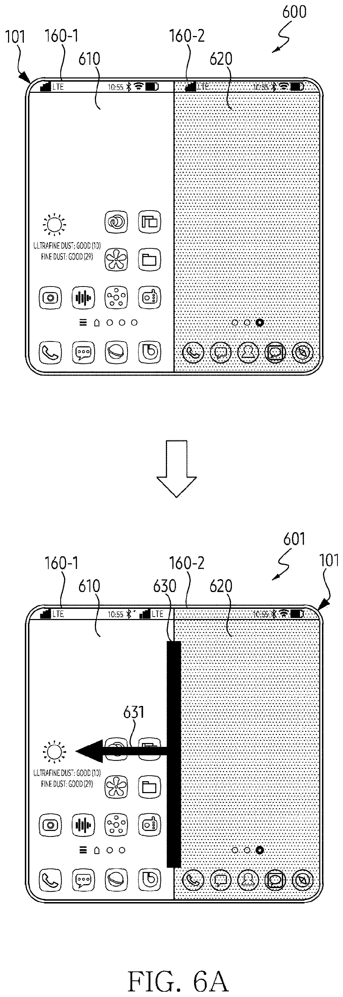

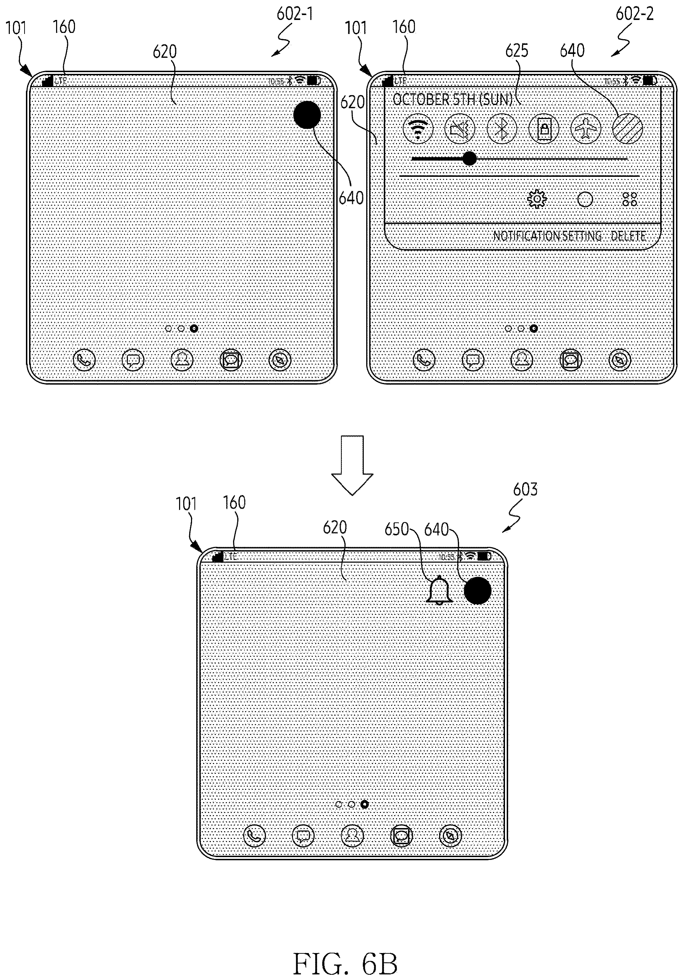

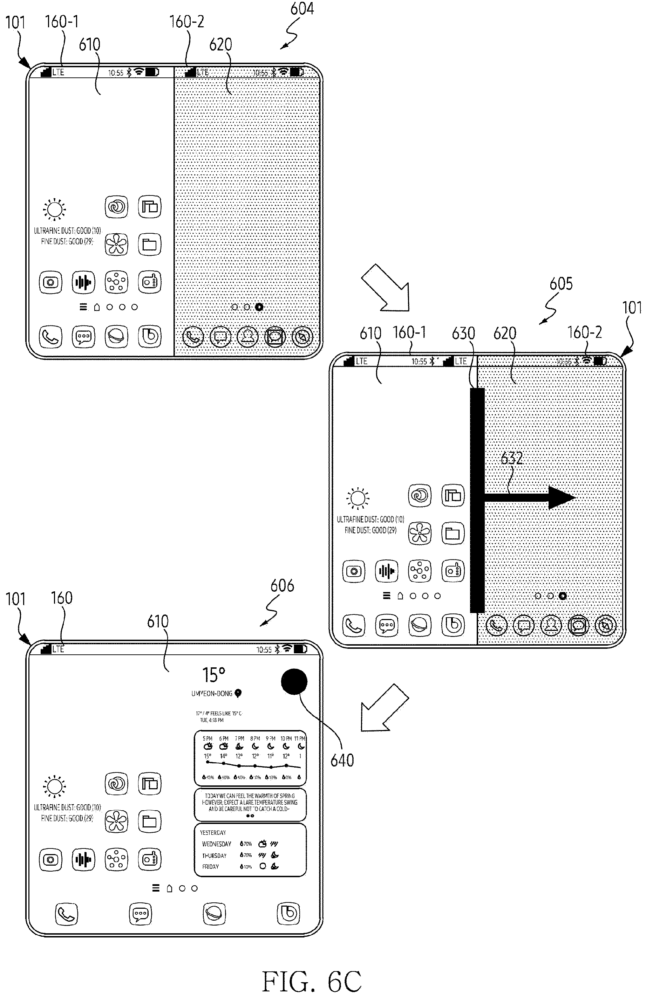

FIGS. 6A to 6C illustrate examples of a method for terminating a dual mode according to an embodiment of the present disclosure.

Although FIGS. 6A to 6C illustrate an example of an electronic device 101 using a dual mode for two SIMs (dual SIMs) for convenience of explanation, an embodiment of the present disclosure is not limited thereto. For example, an embodiment of the present disclosure may include the electronic device 101 using a dual mode for three or more SIMs. The SIM may include a physical SIM (pSIM) and an embedded SIM (eSIM).

The electronic device 101 of FIGS. 6A to 6C may include some or all of components of the electronic device 101 of FIG. 1. For example, the electronic device 101 of FIGS. 6A to 6C may include the processor 120 of FIG. 1. The electronic device 101 of FIGS. 6A to 6C may include a foldable type terminal or a bar type terminal.

Referring to an example 600, the processor 120 may display a first screen 610 in a first partial region 160-1 in a display region of a display 160, and display a second screen 620 in a second partial region 160-2 in the display region of the display 160. For example, the processor 120 may, in response to identifying an input for a visual object 640 for displaying the first screen 610 for a first SIM and the second screen 620 for a second SIM, concurrently display the first screen 610 and the second screen 620 via the display 160. The first partial region 160-1 and the second partial region 160-2 may be included in the display region of the display 160. For example, a default size of the first partial region 160-1 may be set to be the same as a size of the second partial region 160-2. However, an embodiment of the present disclosure is not limited thereto, and the default size of the first partial region 160-1 may be set to be different from the size of the second partial region 160-2. In addition, a size of the first partial region 160-1 may be changed. For example, the size of the first partial region 160-1 may be reduced or expanded, and accordingly, the size of the second partial region 160-2 may be expanded or reduced. A specific detail related thereto is described in FIG. 11.

Referring to an example 601, the processor 120 may identify a user input for moving a boundary 630. For example, the processor 120 may identify a user input for moving the boundary 630 toward a first direction 631 or a second direction (not illustrated). For example, a user input for moving the boundary 630 toward a direction may include a swipe (or a scroll). For example, the processor 120 may identify a user input representing moving the boundary 630 toward the first direction 631. For example, the first direction 631 may represent a left direction when viewed in reference to a vertical direction of the display 160. The second direction may represent a direction opposite to the first direction 631. For example, the second direction may represent a right direction when viewed in reference to a vertical direction of the display 160.

For example, the processor 120 may change the size of the first partial region 160-1 in which the first screen 610 is displayed and display it based on the user input for the boundary 630. For example, based on the user input representing moving the boundary 630 toward the first direction 631, the processor 120 may reduce the size of the first partial region 160-1 and may display the first screen 610 via the first partial region 160-1 of the reduced size. Accordingly, the processor 120 may change the size of the second partial region 160-2 and display it. For example, the processor 120 may display the second screen 620 via the second partial region 160-2 having a size expanded by the reduced size of the first partial region 160-1. The above-described example describes a case of moving the boundary 630 toward the first direction 631, and in contrast, in case that the boundary 630 is moved toward the second direction 232 based on the user input, the size of the first partial region 160-1 may be expanded and the size of the second partial region 160-2 may be reduced.

Referring to an example 601, the processor 120 may identify whether a value representing the changed size of the second partial region 160-2 according to the user input for the boundary 630 is greater than a reference value. For example, in case that the value representing the changed size of the second partial region 160-2 is greater than the reference value, based on at least a portion of the user input representing moving the boundary 630 toward the first direction 631, the processor 120 may display the second screen 620 in the display region of the display 160 as in the example 601. For example, the reference value may be set by a user for each SIM. In addition, the reference value may be set by the user according to a state (e.g., horizontal or vertical) in which the display 160 identified based on a sensor (e.g., the sensor module 176 of FIG. 1) of the electronic device 101 is placed.

Referring to an example 602-1 or an example 602-2, the processor 120 may display the second screen 620 for the second SIM. For example, the second screen 620 may include the visual object 640 for displaying the first screen 610 for the first SIM and the second screen 620. Referring to the example 602-1, the processor 120 may display the second screen 620 and the visual object 640 included in the second screen 620 via the display region of the display 160. For example, the processor 120 may display the second screen 620 and the visual object 640 superimposed on the second screen 620. For example, the visual object 640 may be displayed on a software application for displaying a home screen that controls at least another software application to be executable. Referring to the example 602-2, the second screen 620 may include the visual object 640 for concurrently displaying the first screen 610 and the second screen 620. The second screen 620 of the example 602-2 may include the visual object 640 on a pop-up window (or a quick panel) 625. For example, the pop-up window (or the quick panel) 625 may be displayed in response to at least one user input for a portion (e.g., an upper end portion) of the display 160. The at least one user input may include a swipe or a scroll.

Referring to an example 603, the processor 120 may display the second screen 620 including the visual object 650 for displaying notification information for the first SIM via the display region of the display 160. For example, while providing a second SIM service via the second screen 620, the processor 120 may identify a designated event (e.g., reception of a message for the first SIM) for the first SIM. In case of identifying the designated event for the first SIM, the processor 120 may display the visual object 650 for displaying the notification information for the first SIM. For example, the second screen 620 may include the visual object 650 for displaying the notification information for the first SIM, and the visual object 650 may be concurrently displayed with the visual object 640. The processor 120 may display a visual object displaying the notification information in response to an input for the visual object 650. For example, the visual object displaying the notification information may pop-up from the visual object 650 or may be floated on the visual object 650.

Referring to an example 604, in response to identifying an input for the visual object 640, the processor 120 the processor 120 may display the first screen 610 in the first partial region 160-1 in the display region of the display 160, and display the second screen 620 in the second partial region 160-2 in the display region of the display 160. For example, a default size of the first partial region 160-1 may be set to be the same as a size of the second partial region 160-2. However, an embodiment of the present disclosure is not limited thereto, and the default size of the first partial region 160-1 may be set to be different from the size of the second partial region 160-2. In addition, a size of the first partial region 160-1 may be changed. For example, the size of the first partial region 160-1 may be reduced or expanded, and accordingly, the size of the second partial region 160-2 may be expanded or reduced. A specific detail related thereto is described in FIG. 11.

Comparing the example 603 and the example 604, a layout for the second set of software application of the second screen 620 may be changed. For example, in case of the example 603, the second screen 620 is displayed on a relatively wider display region of the display 160, but in case of the example 604, as the second screen 620 is displayed on the relatively narrower first partial region 160-1, the layout may be changed. For example, the change in the layout may include a gap between software applications in the second set being narrowed, a disposition of software applications in the second set being changed, a size of software application in the second set being reduced, or the number of page indicators for the software application in the second set being increased.

Referring to an example 605, the processor 120 may identify whether a value representing the changed size of the first partial region 160-1 according to the user input for the boundary 630 is greater than a reference value. For example, in case that the value representing the changed size of the first partial region 160-1 is greater than the reference value, based on at least a portion of the user input representing moving the boundary 630 toward the second direction 632, the processor 120 may display the first screen 610 in the display region of the display 160 as in an example 606. For example, the reference value may be set by a user for each SIM. In addition, the reference value may be set by the user according to a state (e.g., horizontal or vertical) in which the display 160 identified based on a sensor (e.g., the sensor module 176 of FIG. 1) of the electronic device 101 is placed.

Referring to the example 606, the processor 120 may display the first screen 610 via the display 160. For example, the first screen 610 may represent a screen for the first SIM set in the electronic device 101. The first screen 610 may include a first set of visual object for displaying a first set of software application. For example, the first set of software application may include a software application that provides a call function. The software application that provides the call function for the first SIM may execute a function of outputting first acoustic data for notifying reception of a call. In addition, the first set of software application may be set based on a first theme. The theme may represent a set of resources that may be applied to a style and a layout of the software application. For example, the first theme may include a black theme and a white theme. For example, the first screen 610, the first set of software application related to the first SIM, and a setting (e.g., acoustic data, theme) of the first set of software application may be included in a setting of the electronic device 101. The first set of software application related to the first SIM and the first screen 610 for displaying the same may be set based on first configuration information.

Referring to the example 606, the first screen 610 may include the visual object 640. For example, the processor 120 may concurrently display the first screen 610 and the visual object 640 included in the first screen 610 via the display region of the display 160. For example, the processor 120 may display the first screen 610 and the visual object 640 superimposed on the first screen 610. For example, the visual object 640 may be displayed on the software application for displaying the home screen that controls at least another software application to be executable. However, an embodiment of the present disclosure is not limited thereto. For example, the visual object 640 may be displayed on a pop-up window (or a quick panel) displayed in response to at least one user input for the display 160. In addition, for example, the visual object 640 may be positioned in a designated region in the display region of the display 160, and the visual object 640 may be set to refrain from being viewed from the outside based on an alpha value. The alpha value may represent transparency of the visual object 640. A specific detail related thereto is described in FIG. 10 below.

Although not illustrated in the example 606, as in the example 603, the processor 120 may display the first screen 610 including the visual object 650 for displaying notification information for the second SIM via the display region of the display 160. For example, while providing a first SIM service via the first screen 610, the processor 120 may identify a designated event (e.g., reception of a message for the second SIM) for the second SIM. In case of identifying the designated event for the second SIM, the processor 120 may display the visual object 650 for displaying the notification information for the second SIM. For example, the first screen 610 may include the visual object 650 for displaying the notification information for the second SIM, and the visual object 650 may be concurrently displayed with the visual object 640 of the example 606. The processor 120 may display a visual object displaying the notification information in response to an input for the visual object 650. For example, the visual object displaying the notification information may pop up from the visual object 650 or may be floated on the visual object 450.

Comparing the example 606 and the example 605, a layout for the first set of software application of the first screen 610 may be changed. For example, in case of the example 606, the first screen 610 is displayed on a relatively wider display region of the display 160, but in case of the example 605, as the first screen 610 is displayed on the relatively narrower first partial region 160-1, the layout may be changed. For example, the change in the layout may include a gap between software applications in the first set being widened, a disposition of software applications in the first set being changed, a size of the software application in the first set being enlarged, or the number of page indicators for the software applications in the first set being reduced.

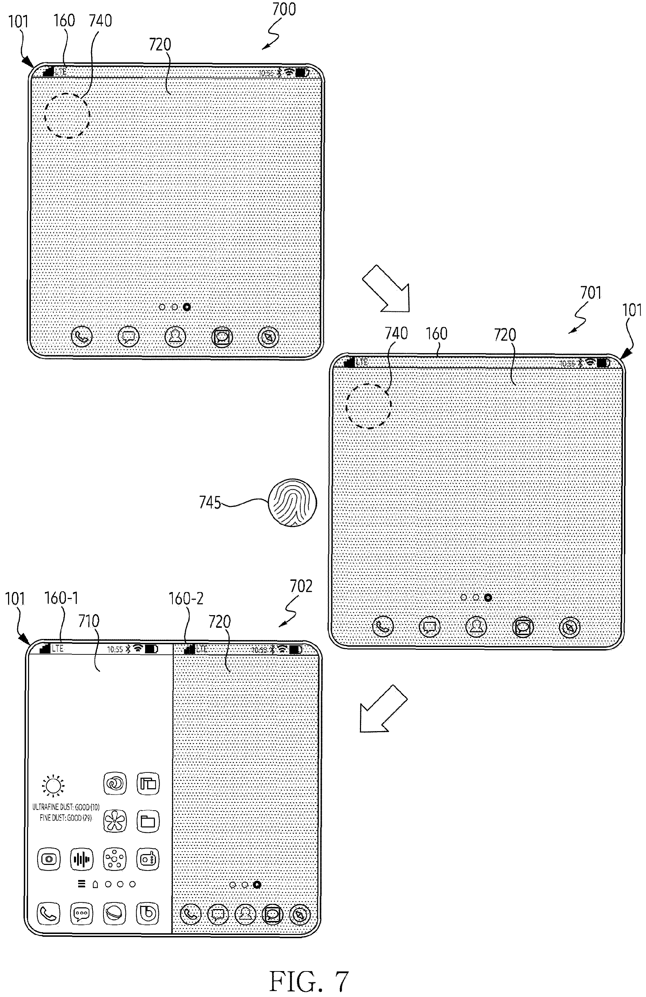

FIG. 7 illustrates examples of a screen for a hidden mode of a visual object for a dual mode according to an embodiment of the present invention.

Although FIG. 7 illustrates an example of an electronic device 101 using a dual mode for two SIMs (dual SIMs) for convenience of explanation, an embodiment of the present disclosure is not limited thereto. For example, an embodiment of the present disclosure may include the electronic device 101 using a dual mode for three or more SIMs. The SIM may include a physical SIM (pSIM) and an embedded SIM (eSIM). The hidden mode may represent a state in which a visual object for a dual mode is set not to be viewed from the outside.

The electronic device 101 of FIG. 7 may include some or all of components of the electronic device 101 of FIG. 1. For example, the electronic device 101 of FIG. 7 may include the processor 120 of FIG. 1. The electronic device 101 of FIG. 7 may include a foldable type terminal or a bar type terminal.

Referring to FIG. 7, in an example 700, the processor 120 may display a second screen 720 via a display 160. For example, the second screen 720 may represent a screen for a second SIM set in the electronic device 101. For example, the second screen 720 may include a second set of visual object for displaying a second software application different from the first set of software application. For example, the second set of software application may include a software application that provides a call function. The software application that provides the call function for the second SIM may execute the function of outputting second acoustic data for notifying reception of a call. The second acoustic data may be set differently from the first acoustic data. In addition, the second set of software application may be set based on a second theme. The theme may represent a set of resources that may be applied to a style and a layout of the software application. The second theme may be set differently from the first theme. For example, the second screen 720, the second set of software application related to the second SIM, and a setting (e.g., acoustic data, theme) of the second set of software application may be included in the setting of the electronic device 101. The second set of software application related to the second SIM and the second screen 720 for displaying the same may be set based on second configuration information. The second configuration information for the second SIM may be set differently from the first configuration information for the first SIM, but at least a portion of the second configuration information may be set to be the same as the first configuration information.

Referring to an example 700, the processor 120 may set a visual object 740 to refrain from being viewed from the outside. For example, the processor 120 may set the visual object 740 to refrain from being viewed from the outside based on an alpha value for the visual object 740. The alpha value may represent transparency of the visual object 740. For example, the processor 120 may set the visual object 740 to be positioned in a designated region. For example, the designated region may be set by a user for each SIM. In addition, the designated region may be set by the user according to a state (e.g., horizontal or vertical) in which the display 160 is placed. Since the visual object 740 is set to refrain from being viewed from the outside, this is to allow the user to easily identify the visual object 740.

Referring to an example 701, the processor 120 may, based on at least a portion of an input for the visual object 740 set not to be viewed from the outside, display a visual object 745 for authenticating a user of a SIM (e.g., the second SIM). For example, the processor 120 may, based on an input for a designated time period (e.g., 3 seconds) for the visual object 740, display the visual object 745. Although the visual object 745 is illustrated as being displayed separately in the example 701, this is only for convenience of explanation. For example, the visual object 745 may be displayed on a display region of the display 160 by being included in the second screen 720. Alternatively, the visual object 745 may not be displayed to be viewed from the outside, and user authentication may be performed based on a physical component included in the electronic device 101.

In addition, although in the example 701, the visual object 745 of a fingerprint authentication method is illustrated for convenience of explanation, an embodiment of the present disclosure is not limited thereto. The visual object 745 for authenticating the user may include a PIN number, a pattern, and eye recognition.

For example, in case that the authentication is successful, the processor 120 may display the first screen 710 and the second screen 720 via the display 160 based on a dual mode, as in an example 702. In case that the authentication fails, the processor 120 may maintain the second screen 720, as in the example 700.

Referring to the example 702, the processor 120 may, in response to identifying that the authentication is successful, display the first screen 710 in a first partial region 160-1 in the display region of the display 160, and display the second screen 720 in a second partial region 160-2 in the display region of the display 160. The first partial region 160-1 and the second partial region 160-2 may be included in the display region of the display 160. For example, a default size of the first partial region 160-1 may be set to be the same as a size of the second partial region 160-2. However, an embodiment of the present disclosure is not limited thereto, and the default size of the first partial region 160-1 may be set to be different from the size of the second partial region 160-2. In addition, a size of the first partial region 160-1 may be changed. For example, the size of the first partial region 160-1 may be reduced or expanded, and accordingly, the size of the second partial region 160-2 may be expanded or reduced. A specific detail related thereto is described in FIG. 11.

Although FIG. 7 illustrates an example of entering the dual mode via user authentication of the second SIM on the second screen 720 for the second SIM, but this is only for convenience of explanation, and an embodiment of the present disclosure is not limited thereto. For example, the processor 120 may enter the dual mode via user authentication of the first SIM on the first screen 710 for the first SIM.

Referring to the above, a device and a method using a dual mode according to embodiments of the present disclosure may set a display of a visual object for displaying a plurality of screens for a plurality of SIMs in a partial region of the display so as not to be viewed from the outside, and may display the visual object for user authentication based on an input for the visual object. Accordingly, in case that a plurality of screens including a screen for a SIM used for personal use are displayed, the user may protect privacy of the user more effectively.

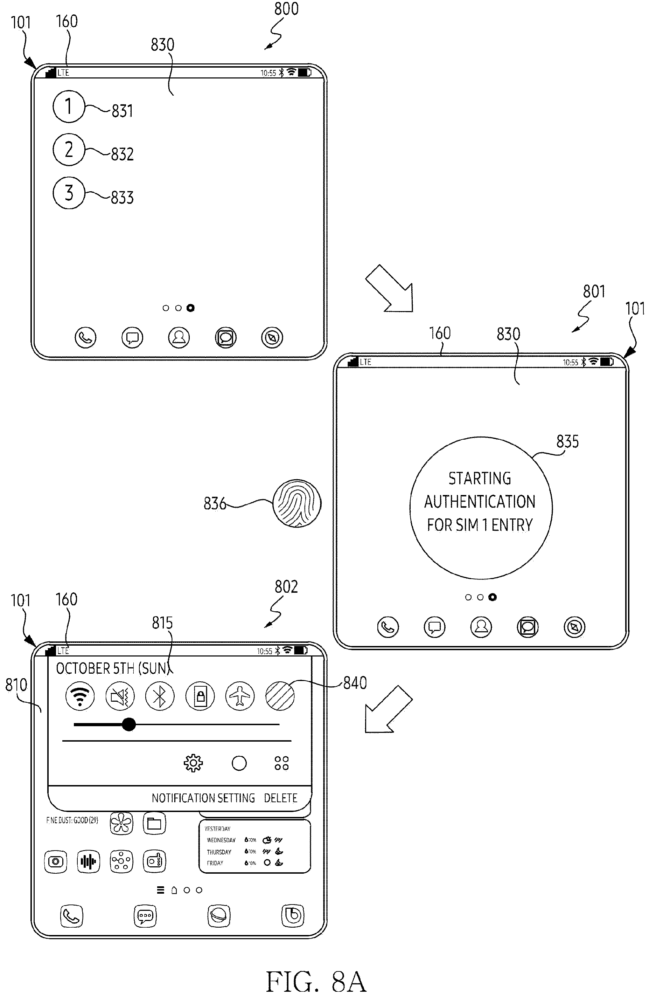

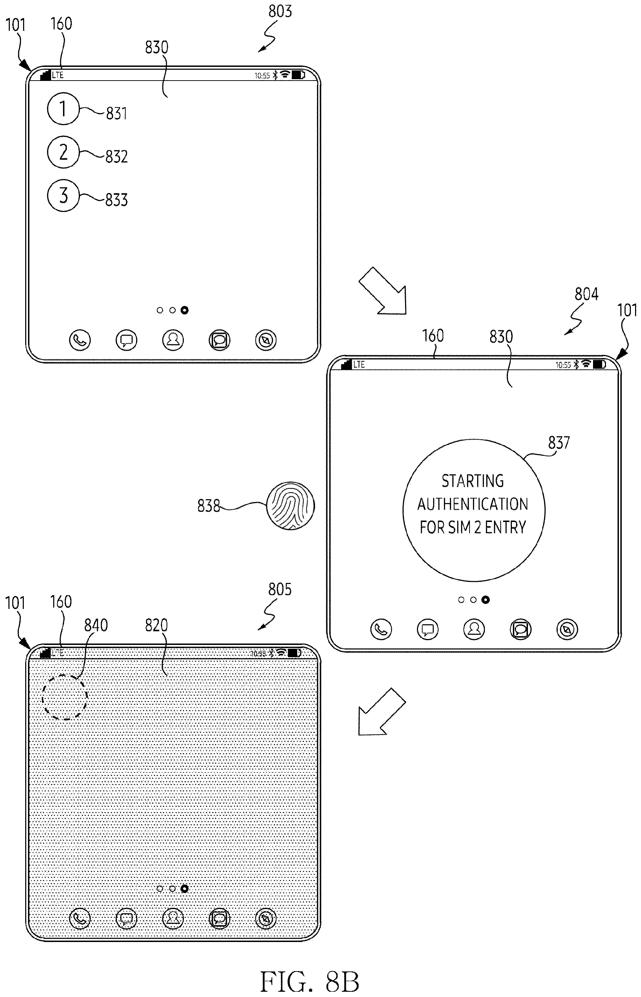

FIGS. 8A and 8B illustrate examples of a method of providing a multi profile service based on a dual mode according to an embodiment of the present disclosure.

Although FIGS. 8A and 8B illustrates an example of an electronic device 101 using a dual mode for two SIMs (dual SIMs) for convenience of explanation, an embodiment of the present disclosure is not limited thereto. For example, an embodiment of the present disclosure may include the electronic device 101 using a dual mode for three or more SIMs. The SIM may include a physical SIM (pSIM) and an embedded SIM (eSIM).

The multi profile service may represent a service for using a plurality of SIMs for a plurality of users via one electronic device 101. Although FIGS. 8A and 8B illustrate an example of using three SIMs for three users via one electronic device 101, an embodiments of the present disclosure are not limited thereto. For example, embodiments of the present disclosure may include a case of using three SIMs for two users via one electronic device 101 or using four SIMs for four users via one electronic device 101.

The electronic device 101 of FIGS. 8A and 8B may include some or all of components of the electronic device 101 of FIG. 1. For example, the electronic device 101 of FIG. 8A and 8B may include the processor 120 of FIG. 1. The electronic device 101 of FIG. 8A and 8B may include a foldable type terminal or a bar type terminal.

Referring to an example 800, the processor 120 may display a screen 830 including visual objects 831, 832, and 833 for displaying a plurality of screens. For example, the processor 120 may display the screen 830 including the visual objects 831, 832, and 833 in a display region of a display 160. The visual object 831 may represent a visual object for displaying a first screen for a first SIM. The visual object 832 may represent a visual object for displaying a second screen for a second SIM. The visual object 833 may represent a visual object for displaying a third screen for a third SIM. For example, the screen 830 may represent an idle state in which all of the first SIM, the second SIM, and the third SIM are not used.

Referring to an example 801, the processor 120 may, based on at least a portion of an input corresponding to one of the visual objects 831, 832, and 833, display a visual object 835 for user authentication. For example, the processor 120 may, based on at least a portion of an input for the visual object 831 corresponding to the first SIM, display the screen 830 including the visual object 835 for guiding the start of an authentication operation for a user of the first SIM. For example, the processor 120 may display a visual object 836 for authenticating the user of the first SIM. Although the visual object 836 is illustrated as being displayed separately in the example 801, this is only for convenience of explanation. For example, the visual object 836 may be displayed on the display region of the display 160 by being included in the screen 830. Alternatively, the visual object 836 may not be displayed to be viewed from the outside, and user authentication may be performed based on a physical component included in the electronic device 101.

In addition, although in the example 801, the visual object 836 of a fingerprint authentication method is illustrated for convenience of explanation, an embodiment of the present disclosure is not limited thereto. The visual object 836 for authenticating a user may include a PIN number, a pattern, and eye recognition.

Referring to an example 802, the processor 120 may, in case that the authentication is successful, display the first screen 810 for the first SIM. For example, the first screen 810 may include a visual object 840 for displaying the screen 830 in an idle state. For example, the processor 120 may display the first screen 810 including the visual object 840 on a pop-up window (or a quick panel) 815. For example, the pop-up window (or a quick panel) 815 may be displayed in response to at least one user input for a portion (e.g., an upper end portion) of the display 160. The at least one user input may include a swipe or a scroll. Although the example 802 illustrates an example of displaying the pop-up window 815 including the visual object 840, embodiments of the present disclosure are not limited thereto. For example, the processor 120 may display the first screen 810 and the visual object 840 included in the first screen 810 via the display region of the display 160. For example, the processor 120 may display the first screen 810 and the visual object 840 superimposed on the first screen 810. For example, the visual object 840 may be displayed on a software application for displaying a home screen that controls at least another software application to be executable. The first screen 810 may include the visual object 840 for displaying the screen 830 in the idle state.

Referring to examples 802 and 803, the processor 120 may identify an input for the visual object 840. The processor 120 may display the screen 830 in response to identifying the input for the visual object 840. For example, processor 120 may display the screen 830 based on at least a portion of the input for the visual object 840.

Referring to an example 804, the processor 120 may, based on at least a portion of an input corresponding to one of the visual objects 831, 832, and 833, display the visual object 835 for user authentication. For example, the processor 120 may, based on at least a portion of an input for the visual object 832 corresponding to the second SIM, display the screen 830 including a visual object 837 for guiding a start of an authentication operation for a user of the second SIM. For example, the processor 120 may display a visual object 838 for authenticating the user of the second SIM. Although the visual object 838 is illustrated as being displayed separately in the example 804, this is only for convenience of explanation. For example, the visual object 838 may be displayed on the display region of the display 160 by being included in the screen 830. Alternatively, the visual object 838 may not be displayed to be viewed from the outside, and user authentication may be performed based on a physical component included in the electronic device 101.

In addition, although in the example 804, the visual object 838 of a fingerprint authentication method is illustrated for convenience of explanation, an embodiment of the present disclosure is not limited thereto. The visual object 838 for authenticating the user may include a PIN number, a pattern, and eye recognition.

Referring to an example 805, the processor 120 may, in case that the authentication is successful, display a second screen 820 for the second SIM. For example, the second screen 820 may include the visual object 840 for displaying the screen 830 in the idle state. For example, the processor 120 may display the second screen 820 and the visual object 840 included in the second screen 820 via the display region of the display 160. For example, the processor 120 may display the second screen 820 and the visual object 840 superimposed on the second screen 820. For example, the visual object 840 may be displayed on the software application for displaying the home screen that controls at least another software application to be executable. The first screen 810 may include the visual object 840 for displaying the screen 830 in the idle state. Although the example 805 illustrates an example of displaying the visual object 840 via the home screen, but embodiments of the present disclosure are not limited thereto. For example, the second screen 820 may include the visual object 840 for displaying the screen 830 in an idle state. For example, the processor 120 may display the second screen 820 including the visual object 840 on a pop-up window (or a quick panel). For example, the pop-up window (or the quick panel) may be displayed in response to at least one user input for a portion (e.g., an upper end portion) of the display 160. The at least one user input may include a swipe or a scroll.

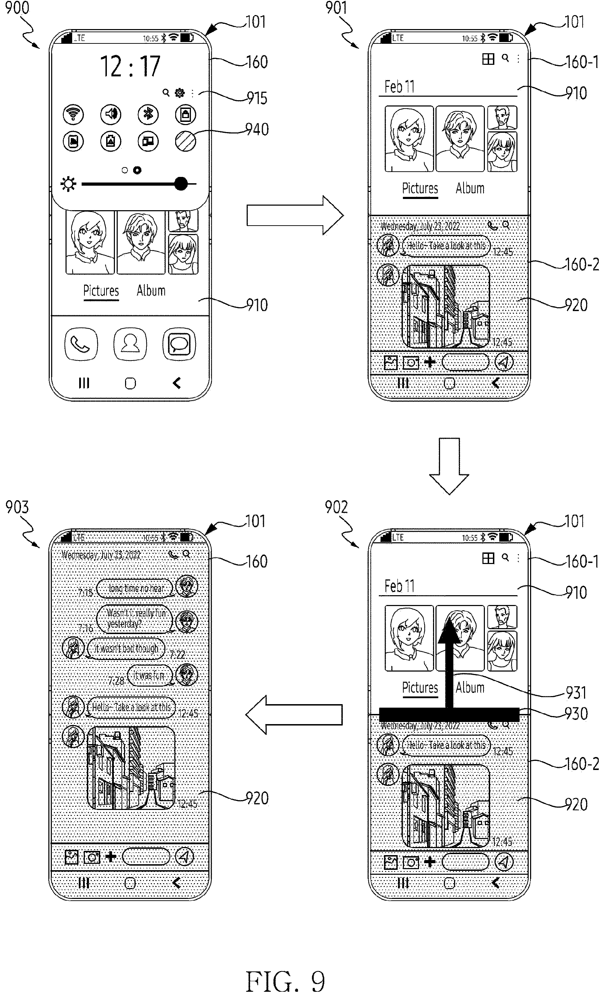

FIG. 9 illustrates another example of an electronic device using a dual mode for a dual subscriber identity module (SIM) according to an embodiment of the present disclosure.

Although FIG. 9 illustrates an example of an electronic device 101 using a dual mode for two SIMs (dual SIMs) for convenience of explanation, an embodiment of the present disclosure is not limited thereto. For example, an embodiment of the present disclosure may include the electronic device 101 using a dual mode for three or more SIMs. The SIM may include a physical SIM (pSIM) and an embedded SIM (eSIM).

The electronic device 101 of FIG. 9 may include some or all of components of the electronic device 101 of FIG. 1. For example, the electronic device 101 of FIG. 9 may include the processor 120 of FIG. 1. The electronic device 101 of FIG. 9 may include a foldable type terminal or a bar type terminal. For example, the electronic device 101 of FIG. 2 may represent an example of a foldable type terminal, and the electronic device 101 of FIG. 9 may represent an example of a bar type terminal.

Referring to FIG. 9, in an example 900, the processor 120 may display a first screen 910 via a display 160. For example, the first screen 910 may represent a screen for a first SIM set in the electronic device 101. The first screen 910 may include a first set of visual object for displaying a first set of software application. For example, the first set of software application may include a software application that provides a call function. The software application that provides the call function for the first SIM may execute a function of outputting first acoustic data for notifying reception of a call. In addition, the first set of software application may be set based on a first theme. The theme may represent a set of resources that may be applied to a style and a layout of the software application. For example, the first theme may include a black theme and a white theme. For example, the first screen 910, the first set of software application related to the first SIM, and a setting (e.g., acoustic data, theme) of the first set of software application may be included in the setting of the electronic device 101. The first set of software application related to the first SIM and the first screen 910 for displaying the same may be set based on first configuration information.

Referring to the example 900, the first screen 910 may include a visual object 940 for displaying the first screen 910 and a second screen 920. The first screen 910 of the example 900 may include the visual object 940 on a pop-up window (or a quick panel) 915. For example, the pop-up window (or the quick panel) 915 may be displayed in response to at least one user input for a portion (e.g., an upper end portion) of the display 160. The at least one user input may include a swipe or a scroll. Embodiments of the present disclosure are not limited thereto. For example, the processor 120 may display the first screen 910 and the visual object 940 included in the first screen 910 via a display region of the display 160. For example, the processor 120 may display the first screen 910 and the visual object 940 superimposed on the first screen 910. For example, the visual object 940 may be displayed on a software application for displaying a home screen that controls at least another software application to be executable. Alternatively, the processor 120 may set the visual object 940 to refrain from being viewed from the outside. For example, the processor 120 may set the visual object 940 to refrain from being viewed from the outside based on an alpha value for the visual object 940. The alpha value may represent transparency of the visual object 940. A specific detail related thereto is described in FIG. 10.

For example, the processor 120 may identify an input for the visual object 940. For example, the processor 120 may identify at least one user input for the visual object 940. For example, the user input may include a touch input. Alternatively, the processor 120 may identify an input for the visual object 940 using a designated gesture. For example, the processor 120 may identify an input for the visual object 940 by using the designated gesture representing an operation of shaking the electronic device 101 n times.

Although not illustrated in the example 900, the processor 120 may identify that a plurality of SIMs are set. For example, the processor 120 may identify whether a pSIM is inserted and whether an eSIM is set. In response to identifying that the plurality of SIMs are set, the processor 120 may activate a function of concurrently displaying the second screen 920 for the second SIM and the first screen 910 via a software application with respect to the visual object 940. In case that the function is activated, the processor 120 may display the first screen 910 and the second screen 920 via the display 160 by identifying the input for the visual object 940.

Referring to an example 901, the processor 120 may, in response to identifying the input for the visual object 940, display the first screen 910 in a first partial region 160-1 in the display region of the display 160, and display the second screen 920 in a second partial region 160-2 in the display region of the display 160. The first partial region 160-1 and the second partial region 160-2 may be included in the display region of the display 160. For example, the first partial region 160-1 and the second partial region 160-2 of FIG. 9 may be disposed vertically, unlike the first partial region 160-1 and the second partial region 160-2 of FIG. 2, which are disposed horizontally. For example, a default size of the first partial region 160-1 may be set to be the same as a size of the second partial region 160-2. However, an embodiment of the present disclosure is not limited thereto, and the default size of the first partial region 160-1 may be set to be different from the size of the second partial region 160-2. In addition, a size of the first partial region 160-1 may be changed. For example, the size of the first partial region 160-1 may be reduced or expanded, and accordingly, the size of the second partial region 160-2 may be expanded or reduced. A Specific detail related thereto is described in FIG. 11.

For example, the processor 120 may, in response to identifying the input for the visual object 940, cease displaying the visual object 940. For example, in case that the visual object 940 is displayed on the software application for displaying the home screen, the processor may cease displaying the visual object 940 in response to identifying the input.

For example, the second screen 920 may include a second set of visual object for displaying a second software application different from the first set of software application. For example, the second set of software application may include the software application that provides the call function. The software application that provides the call function for the second SIM may execute the function of outputting second acoustic data for notifying reception of a call. The second acoustic data may be set differently from the first acoustic data. In addition, the second set of software application may be set based on a second theme. The theme may represent a set of resources that may be applied to a style and a layout of the software application. The second theme may be set differently from the first theme. For example, the second screen 920, the second set of software application related to the second SIM, and a setting (e.g., acoustic data, theme) of the second set of software application may be included in the setting of the electronic device 101. The second set of software application related to the second SIM and the second screen 920 for displaying the same may be set based on second configuration information. The second configuration information for the second SIM may be set differently from the first configuration information for the first SIM, but at least a portion of the second configuration information may be set to be the same as the first configuration information.

Comparing the example 900 and the example 901, a layout for the first set of software application of the first screen 910 may be changed. For example, in case of the example 900, the first screen 910 is displayed on a relatively wider display region of the display 160, but in case of the example 901, as the first screen 210 is displayed on the relatively narrower first partial region 160-1, the layout may be changed. For example, the change in the layout may include a gap between software applications in the first set being narrowed, a disposition of software applications in the first set being changed, a size of software application in the first set being reduced, or the number of page indicators for the software application in the first set being increased.

Referring to an example 902, the processor 120 may identify a user input for moving a boundary 930. For example, the processor 120 may identify a user input for moving the boundary 930 toward a first direction 931 or a second direction (not illustrated). For example, a user input for moving the boundary 930 toward a direction may include a swipe (or a scroll). For example, the processor 120 may identify a user input representing moving the boundary 930 toward the first direction 931. For example, the first direction 931 may represent an upward direction when viewed in reference to a vertical direction of the display 160. The second direction may represent a direction opposite to the first direction 931. For example, the second direction may represent a downward direction when viewed in reference to a vertical direction of the display 160.

For example, the processor 120 may change the size of the first partial region 160-1 in which the first screen 910 is displayed and display it based on the user input for the boundary 930. For example, based on the user input representing moving the boundary 930 toward the first direction 931, the processor 120 may reduce the size of the first partial region 160-1 and may display the first screen 910 via the first partial region 160-1 of the reduced size. Accordingly, the processor 120 may change the size of the second partial region 160-2 and display it. For example, the processor 120 may display the second screen 920 via the second partial region 160-2 having a size expanded by the reduced size of the first partial region 160-1. The above-described example describes a case of moving the boundary 930 toward the first direction 931, and in contrast, in case that the boundary 930 is moved toward the second direction based on the user input, the size of the first partial region 160-1 may be expanded and the size of the second partial region 160-2 may be reduced.

Referring to an example 903, the processor 120 may identify whether a value representing the changed size of the second partial region 160-2 (or the first partial region 160-1) according to the user input for the boundary 930 is greater than a reference value. For example, in case that the value representing the changed size of the second partial region 160-2 is greater than the reference value, based on at least a portion of the user input representing moving the boundary 930 toward the first direction 931, the processor 120 may display the second screen 920 in the display region of the display 160 as in the example 903. Although not illustrated in FIG. 9, the processor 120 may resume a display of the visual object 940, with respect to the visual object 940 that is ceased to display in the example 901. For example, in case of displaying again the first screen 910 in the display region of the display 160, after displaying the first screen 910 and the second screen 920 in response to the input for the visual object 940 in the example 901, the processor 120 may resume the display of the visual object 940 superimposed on the first screen 910.

For example, in case that the value representing a changed size of the first partial region 160-1 is greater than the reference value, based on at least a portion of the user input representing moving the boundary 930 toward the second direction, the processor 120 may display the first screen 910 in the display region of the display 160 as in the example 901. For example, the reference value may be set by a user for each SIM. In addition, the reference value may be set by the user according to a state (e.g., horizontal or vertical) in which the display 160 identified based on a sensor (e.g., the sensor module 176 of FIG. 1) of the electronic device 101 is placed.

For example, the processor 120 may, in case that a value representing the changed size of the second partial region 160-2 (or the first partial region 160-1) according to the user input for the boundary 930 is greater than the reference value, identify termination of the dual mode.

Comparing the example 902 and the example 903, a layout for the second set of software application of the second screen 920 may be changed. For example, in case of the example 902, the second screen 920 is displayed on the relatively narrower second partial region 160-2, but in case of the example 903, as the second screen 920 is displayed on the relatively wider display region of the display 160, the layout may be changed. For example, the change in the layout may include a gap between software applications in the second set being widened, a disposition of software applications in the second set being changed, a size of software application in the second set being expanded, or the number of page indicators for the software application in the second set being reduced.

Referring to the above description, a device and a method using a dual mode according to embodiments of the present disclosure may display a plurality of screens for a plurality of SIMs via partial regions of the display. The device and method using the dual mode according to embodiments of the present disclosure may use a visual object for displaying the plurality of screens for the plurality of SIMs in partial regions of the display. The device and the method using the dual mode according to embodiments of the present disclosure may provide a more intuitive dual mode-based service to a user by displaying screens set differently for each of the plurality of SIMs. Accordingly, the user may effectively use the plurality of SIMs via one electronic device. For example, the user may use some of SIMs for a work purpose and other some of SIMs for a personal purpose.

FIG. 10 illustrates examples of a visual object for a dual mode according to an embodiment of the present disclosure.

Although FIG. 10 illustrates an example of an electronic device 101 using a dual mode for two SIMs (dual SIMs) for convenience of explanation, an embodiment of the present disclosure is not limited thereto. For example, an embodiment of the present disclosure may include the electronic device 101 using a dual mode for three or more SIMs. The SIM may include a physical SIM (pSIM) and an embedded SIM (eSIM).

The electronic device 101 of FIG. 10 may include some or all of components of the electronic device 101 of FIG. 1. For example, the electronic device 101 of FIG. 10 may include the processor 120 of FIG. 1. The electronic device 101 of FIG. 10 may include a foldable type terminal or a bar type terminal.

FIG. 10 illustrates examples 1000, 1001, and 1002 of a visual object 1040 for a dual mode. Referring to the examples 1000, 1001, and 1002, the electronic device 101 may display a first screen 1010. For example, the processor 120 may display the first screen 1010 for a first SIM in a display region of a display 160. For example, the first screen 1010 may include a first set of visual object for displaying a first set of software application.

Referring to the example 1000, the processor 120 may display the first screen 1010 including a pop-up window (or a quick panel) 1015. For example, the first screen 1010 may include a visual object 1040-1 for the dual mode (e.g., concurrently displaying the first screen 1010 and a second screen (not illustrated)) on the pop-up window 1015. For example, the pop-up window (or the quick panel) 1015 may be displayed in response to at least one user input for a portion (e.g., an upper end portion) of the display 160. The at least one user input may include a swipe or a scroll.

Referring to the example 1001, the processor 120 may concurrently display the first screen 1010 and a visual object 1040-2 included in the first screen 910 via the display region of the display 160. For example, the processor 120 may display the first screen 1010 and the visual object 1040-2 superimposed on the first screen 1010. For example, the visual object 1040 may be displayed on a software application for displaying a home screen that controls at least another software application to be executable.

Referring to the example 1002, the processor 120 may set a visual object 1040-3 to refrain from being viewed from the outside. For example, the processor 120 may set the visual object 1040-3 to refrain from being viewed from the outside based on an alpha value for the visual object 1040-3. The alpha value may represent transparency of the visual object 1040-3. For example, the processor 120 may set the visual object 1040-3 to be positioned in a designated region. For example, the designated region may be set by a user for each SIM. In addition, the designated region may be set by the user according to a state (e.g., horizontal or vertical) in which the display 160 is placed. Since the visual object 1040-3 is set to refrain from being viewed from the outside, this is to allow the user to easily identify the visual object 1040-3.

FIG. 11 illustrates an example of displaying screens of different sizes using a dual mode according to an embodiment of the present disclosure.

Although FIG. 11 illustrates an example of an electronic device 101 using a dual mode for two SIMs (dual SIMs) for convenience of explanation, an embodiment of the present disclosure is not limited thereto. For example, an embodiment of the present disclosure may include the electronic device 101 using a dual mode for three or more SIMs. The SIM may include a physical SIM (pSIM) and an embedded SIM (eSIM).

The electronic device 101 of FIG. 11 may include some or all of components of the electronic device 101 of FIG. 1. For example, the electronic device 101 of FIG. 11 may include the processor 120 of FIG. 1. The electronic device 101 of FIG. 11 may include a foldable type terminal or a bar type terminal.

Referring to an example 1100, the processor 120 may, in response to identifying an input for a visual object (not illustrated) for concurrently displaying a first screen 1110 and a second screen 1120, display the first screen 1110 in a first partial region 160-1 in a display region of a display 160, and display the second screen 1120 in a second partial region 160-2 in the display region of the display 160.

Referring to the example 1100, the processor 120 may identify a user input for moving a boundary 1130. For example, the processor 120 may identify a user input for moving the boundary 1130 toward a first direction 1131 or a second direction 1132. For example, a user input for moving the boundary 1130 toward a direction may include a swipe (or a scroll). For example, the processor 120 may identify a user input representing moving the boundary 1130 toward the first direction 1131. For example, the first direction 1131 may represent a left direction when viewed in reference to a vertical direction of the display 160. The second direction may represent a direction opposite to the first direction 1131. For example, the second direction may represent a right direction when viewed in reference to a vertical direction of the display 160.

Referring to the example 1100 and an example 1101, the processor 120 may change a size of the first partial region 160-1 in which the first screen 1110 is displayed and display it based on a user input for the boundary 1130. For example, based on the user input representing moving the boundary 1130 toward the first direction 1131, the processor 120 may reduce the size of the first partial region 160-1 and may display the first screen 1110 via a first partial region 160-3 of the reduced size. Accordingly, the processor 120 may change the size of the second partial region 160-2 and display it. For example, the processor 120 may display the second screen 1120 via a second partial region 160-4 having a size expanded by the size reduced from the first partial region 160-1 to the first partial region 160-3. The example 1101 illustrates a case of moving the boundary 1130 toward the first direction 1131, but in contrast, in case that the boundary 1130 is moved toward the second direction 1132 based on the user input, the size of the first partial region 160-1 may be expanded and the size of the second partial region 160-2 may be reduced.

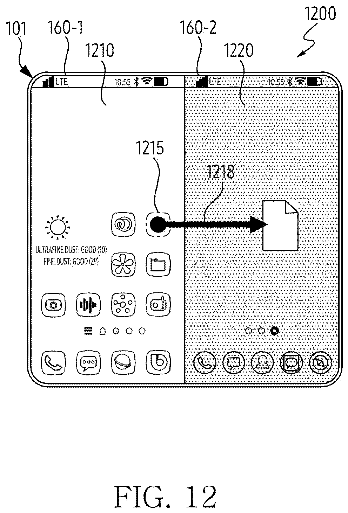

FIG. 12 illustrates an example of a method of transmitting data in a dual mode according to an embodiment of the present disclosure.

Although FIG. 12 illustrates an example of an electronic device 101 using a dual mode for two SIMs (dual SIMs) for convenience of explanation, an embodiment of the present disclosure is not limited thereto. For example, an embodiment of the present disclosure may include the electronic device 101 using a dual mode for three or more SIMs. The SIM may include a physical SIM (pSIM) and an embedded SIM (eSIM).

The electronic device 101 of FIG. 12 may include some or all of components of the electronic device 101 of FIG. 1. For example, the electronic device 101 of FIG. 12 may include the processor 120 of FIG. 1. The electronic device 101 of FIG. 12 may include a foldable type terminal or a bar type terminal.

In an example 1200, the electronic device 101 may be in a state of using a dual mode. For example, the processor 120 may, in response to identifying an input for a visual object for a dual mode (e.g., displaying a first screen 1210 and a second screen 1220), display the first screen 1210 in a first partial region 160-1 of a display (e.g., the display module 160 of FIG. 1) and display the second screen 1220 in a second partial region 160-2.

For example, the processor 120 may display the first screen 1210 including a visual object 1215 in the first partial region 160-1. For example, the processor 120 may, in response to identifying a designated gesture 1218 for the visual object 1215, transmit data for the visual object 1215 from a first SIM to a second SIM. For example, the processor 120 may identify the designated gesture 1218 for the visual object 1215. For example, the designated gesture 1218 may include at least one user input. For example, the designated gesture 1218 may include a drag and drop toward the second screen 1220 from the first screen 1210. For example, in case that the visual object 1215 is a visual object corresponding to a software application, the data may include information for installing the software application. For example, when the visual object 1215 is a visual object corresponding to a file (e.g., a picture, a message, and the like), the data may include information for copying the file. Alternatively, the designated gesture 1218 may include an operation of shaking the electronic device 101 n times after a user input for a designated time period for the visual object 1215.

Referring to the above description, a device and a method according to embodiments of the present disclosure may easily transmit data from a specific SIM to another SIM in case of using a dual mode. At this time, the device and the method according to embodiments of the present disclosure may transmit data via a more intuitive operation (e.g., a drag-and-drop), thereby providing a more convenient user experience to a user.

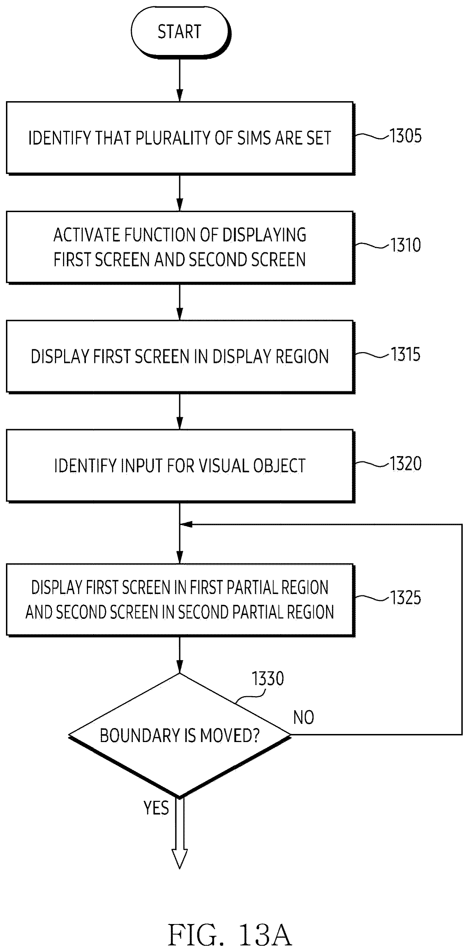

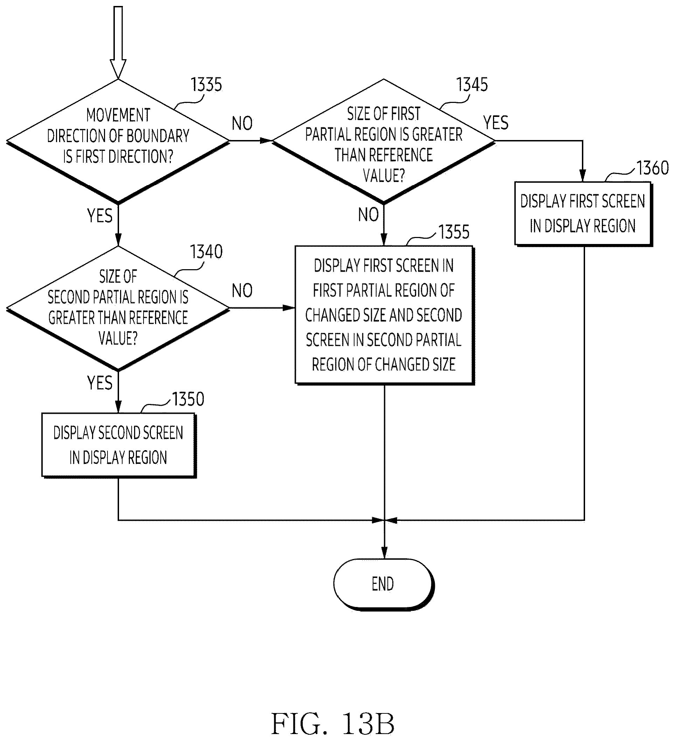

FIGS. 13A and 13B are flowcharts illustrating an example of a method of providing a dual SIM service based on a dual mode according to an embodiment of the present disclosure.

Although FIGS. 13A and 13B illustrate an example of an electronic device 101 using a dual mode for two SIMs (dual SIMs) for convenience of explanation, an embodiment of the present disclosure is not limited thereto. For example, an embodiment of the present disclosure may include the electronic device 101 using a dual mode for three or more SIMs. The SIM may include a physical SIM (pSIM) and an embedded SIM (eSIM).

The method of FIGS. 13A and 13B may be performed by the electronic device 101 of FIG. 1. For example, the method may be performed by the processor 120 of FIG. 1.

Referring to FIGS. 13A and 13B, in operation 1305, the processor 120 may identify that a plurality of SIMs is set. For example, the processor 120 may identify whether a pSIM is inserted into the electronic device 101 and whether an eSIM is set.

In operation 1310, processor 120 may activate a function of displaying a first screen and a second screen. For example, the processor 120 may, in response to identifying that a plurality of SIMs is set, activate a function of concurrently displaying the second screen for a second SIM and the first screen via a software application with respect to a visual object. The visual object may represent a visual object for displaying the first screen for a first SIM and the second screen for the second SIM.

In operation 1315, the processor 120 may display the first screen in a display region. For example, the processor 120 may display the first screen for the first SIM in a display region of a display (e.g., the display module 160 of FIG. 1). For example, the processor 120 may display the first screen by using the entire display region. In FIG. 13A, although the operation 1315 is illustrated to be performed after operation 1305 and operation 1310, an embodiment of the present disclosure is not limited thereto. The operation 1315 may be performed before the operation 1305 and the operation 1310 or may also be performed between the operation 1305 and the operation 1310.

In operation 1320, the processor 120 may identify an input for a visual object. For example, the processor 120 may identify an input for the visual obj ect for displaying the first screen and the second screen. For example, the processor 120 may identify at least one user input for the visual object. For example, the user input may include a touch input. Alternatively, the processor 120 may identify an input for the visual object using a designated gesture. For example, the processor 120 may identify an input for the visual object using the designated gesture representing an operation of shaking the electronic device 101 n times. For example, the processor 120 may identify, based on the input for the visual object, that a dual mode is executed.

In operation 1325, the processor 120 may display the first screen in a first partial region and display the second screen in a second partial region. For example, in case that the function is activated, the processor 120 may display the first screen and the second screen via the display by identifying the input for the visual object for displaying the first screen and the second screen. The processor 120 may display the first screen via the first partial region in the display region of the display and display the second screen via the second partial region in the display region. For example, a default size of the first partial region may be set to be the same as a size of the second partial region. However, an embodiment of the present disclosure is not limited thereto, and the default size of the first partial region may be set to be different from the size of the second partial region. In addition, a size of the first partial region may be changed. For example, the size of the first partial region may be reduced or expanded, and accordingly, the size of the second partial region may be expanded or reduced.

In the operation 1325, the processor 120 may set a setting of the electronic device 101 for the first screen displayed in the first partial region based on first configuration information related to the first SIM and may set the setting of the electronic device 101 for the second screen displayed in the second partial region based on second configuration information related to the second SIM. For example, the setting of the electronic device for the first screen may be applied to a first set of software application related to the first SIM and a screen (e.g., the first partial region of the display) for displaying the same. For example, the setting of the electronic device for the second screen may be applied to a second set of software application related to the second SIM and a screen (e.g., the second partial region of the display) for displaying the same. For example, the processor 120 may identify a user input for the first partial region or the second partial region. In response to identifying the user input for the first partial region or the second partial region, the processor 120 may set another setting (e.g., acoustic data when receiving a call) other than the setting of the electronic device displayed via the display region (e.g., the first partial region and the second partial region) of the display based on SIM-related configuration information corresponding to the identified user input.

In operation 1330, the processor 120 may identify whether a boundary is moving. For example, the processor 120 may identify a user input for moving the boundary between the first screen and the second screen. For example, the user input for moving the boundary toward a direction may include a swipe (or a scroll). In the operation 1330, in case that the processor 120 identifies that the boundary is moving, the processor 120 may perform operation 1335. In contrast, in case that the processor 120 identifies that the boundary is not moving, the processor 120 may perform the operation 1325. For example, in case of identifying that the boundary is not moving, the processor 120 may maintain displaying the first screen in the first partial region and displaying the second screen in the second partial region.

In the operation 1335, the processor 120 may identify whether a direction of movement of the boundary is a first direction. For example, the processor 120 may identify whether the direction of movement of the boundary is the first direction based on an input representing movement of the boundary. For example, the first direction may represent a left direction when viewed in reference to a vertical direction of the display 160. However, this is only an example for convenience of explanation, and embodiments of the present disclosure are not limited thereto.

In the operation 1335, in case that the processor 120 identifies that the direction of movement is the first direction, the processor 120 may perform operation 1340. In the operation 1335, in case that the processor 120 identifies that the direction of movement is a second direction (e.g., a right direction) opposite to the first direction, the processor 120 may perform operation 1345.

In the operation 1340, the processor 120 may identify whether the size of the second partial region is greater than a reference value. For example, the processor 120 may identify that the size of the second partial region, in which the second screen is displayed, is changed as the boundary moves toward the first direction. The processor 120 may identify whether the changed (e.g., expanded) size of the second partial region is greater than the reference value as the boundary moves toward the first direction. For example, the reference value may be set by a user for each SIM. In addition, the reference value may be set by the user according to a state (e.g., horizontal or vertical) in which the display identified based on a sensor (e.g., the sensor module 176 of FIG. 1) of the electronic device 101 is placed.

In the operation 1340, in case that the processor 120 identifies that the size of the second partial region is greater than the reference value, the processor 120 may perform operation 1350. In the operation 1340, in case that the processor 120 identifies that the size of the second partial region is less than or equal to the reference value, the processor 120 may perform operation 1355.

In the operation 1345, the processor 120 may identify whether the size of the first partial region is greater than a reference value. For example, the processor 120 may identify that the size of the first partial region, in which the first screen is displayed, is changed as the boundary moves toward the second direction. The processor 120 may identify whether the changed (e.g., expanded) size of the first partial region is greater than the reference value as the boundary moves toward the second direction. For example, the reference value may be set by a user for each SIM. In addition, the reference value may be set by the user according to a state (e.g., horizontal or vertical) in which the display identified based on a sensor (e.g., the sensor module 176 of FIG. 1) of the electronic device 101 is placed.

In the operation 1345, in case that the processor 120 identifies that the size of the first partial region is greater than the reference value, the processor 120 may perform operation 1360. In the operation 1345, in case that the processor 120 identifies that the size of the second partial region is less than or equal to the reference value, the processor 120 may perform the operation 1355.

In the operation 1350, the processor 120 may display the second screen in the display region. For example, the processor 120 may, in case of identifying that the size of the second partial region is greater than the reference value in the operation 1340, may display the second screen in the display region of the display by extending the second screen. In the operation 1325, the first screen is displayed in the first partial region and the second screen is displayed in the second partial region, and as it is identified that the size of the second partial region is greater than the reference value in the operation 1340, the second screen may be expanded and displayed via the entire display region.

For example, the processor 120 may concurrently display the visual object for displaying the first screen and the second screen, and the second screen. For example, the visual object may be superimposed on the second screen. For example, in case of identifying that the size of the second partial region is greater than the reference value, the processor 120 may identify that the dual mode is terminated and that the second SIM is selected. For example, the processor 120 may, based on the second configuration information related to the second SIM, change the setting of the electronic device 101. For example, in the operation 1325, the processor 120 may set the setting of the electronic device 101 for the first screen displayed in the first partial region based on the first configuration information related to the first SIM and may set the setting of the electronic device 101 for the second screen displayed in the second partial region based on the second configuration information related to the second SIM. In the operation 1340, in response to identifying that the second SIM is selected, the processor 120 may change the setting of the electronic device 101 based on the second configuration information related to the second SIM. For example, the setting may be applied to the second set of software application related to the second SIM and the screen (e.g., the entire display region of the display) for displaying the same.

In the operation 1355, the processor 120 may display the first screen in the first partial region of the changed size and the second screen in the second partial region of the changed size. For example, the processor 120 may identify the second partial region of the changed (e.g., expanded) size identified in the operation 1340 and the first partial region of the changed (e.g., reduced) size according to the second partial region. The processor 120 may display the first screen via the reduced first partial region identified via the operation 1340 and display the second screen via the expanded second partial region. In addition, the processor 120 may identify the first partial region of the changed (e.g., expanded) size identified in the operation 1345 and the second partial region of the changed (e.g., reduced) size according to the first partial region. The processor 120 may display the first screen via the expanded first partial region identified via the operation 1345 and display the second screen via the reduced second partial region.

In the operation 1360, the processor 120 may display the first screen in the display region. For example, the processor 120 may, in case of identifying that the size of the first partial region is greater than the reference value in the operation 1345, may display the first screen in the display region of the display by extending the first screen. In the operation 1325, the first screen is displayed in the first partial region and the second screen is displayed in the second partial region, and as it is identified that the size of the first partial region is greater than the reference value in the operation 1345, the first screen may be expanded and displayed via the entire display region.

For example, the processor 120 may concurrently display the visual object for displaying the first screen and the second screen, and the first screen. For example, the visual object may be superimposed on the first screen. For example, in case of identifying that the size of the first partial region is greater than the reference value, the processor 120 may identify that the dual mode is terminated and that the first SIM is selected. For example, the processor 120 may, based on the first configuration information related to the first SIM, change the setting of the electronic device 101. For example, in the operation 1325, the processor 120 may set the setting of the electronic device 101 for the first screen displayed in the first partial region based on the first configuration information related to the first SIM and may set the setting of the electronic device 101 for the second screen displayed in the second partial region based on the second configuration information related to the second SIM. In the operation 1345, in response to identifying that the first SIM is selected, the processor 120 may change the setting of the electronic device 101 based on the first configuration information related to the first SIM. For example, the setting may be applied to the first set of software application related to the first SIM and the screen (e.g., the entire display region of the display) for displaying the same.

When referring to FIGS. 13A and 13B, it was assumed that in the operation 1315, the first screen is displayed in the display region, and in case that the first screen is displayed again in the display region in the operation 1360, the visual object being concurrently displayed with the first screen may be referred to as a display of the visual object being resumed.

Referring to the above description, a device and a method using a dual mode according to embodiments of the present disclosure may display a plurality of screens for a plurality of SIMs via partial regions of the display. The device and the method using the dual mode according to embodiments of the present disclosure may use a visual object for displaying the plurality of screens for the plurality of SIMs in partial regions of the display. The device and method using the dual mode according to embodiments of the present disclosure may provide a more intuitive dual mode-based service to a user by displaying screens set differently for each of the plurality of SIMs. Accordingly, the user may effectively use the plurality of SIMs via one electronic device. For example, the user may use some of SIMs for a work purpose and other some of SIMs for a personal purpose.

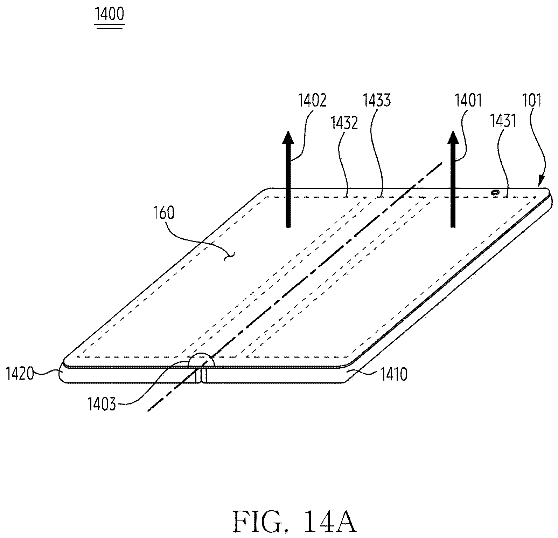

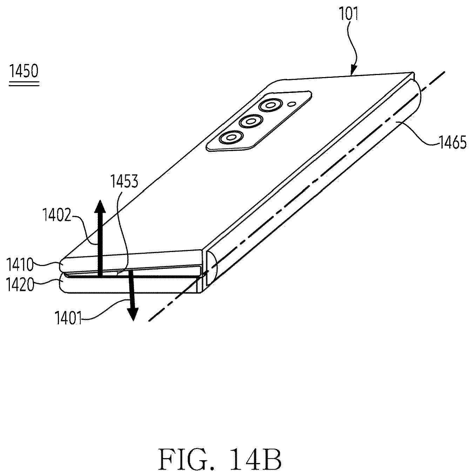

FIGS. 14A and 14B illustrate an example of a state of a display of an electronic device according to an embodiment of the present disclosure.

Referring to FIG. 14A, a display 160 may include a display region corresponding to a region capable of receiving a touch input. For example, the display region may include a first display region 1431 disposed or formed on a first housing 1410 of an electronic device 101, a second display region 1432 disposed or formed on a second housing 1420 of the electronic device 101, and a third display region 1433 between the first display region 1431 and the second display region 1432. For example, the third display region 1433 may be disposed across a folding housing (a folding housing 1465 in FIG. 14B) including a hinge structure (not illustrated in FIGS. 14A and 14B) for providing the plurality of states.

For example, the display 160 may be in a state 1400 that is the first state among the plurality of states. For example, the state 1400 may be an unfolding state in which the second housing 1420 is fully folded out with respect to the first housing 1410 by a folding housing (the folding housing 1465 illustrated in FIG. 14B). For example, the state 1400 may be a state in which a first direction 1401 facing the first display region 1431 is substantially parallel to a second direction 1402 facing the second display region 1432. For example, the state 1400 may be a state in which the first display region 1431, the second display region 1432, and the third display region 1433 are disposed on one virtual plane. For example, the state 1400 may be a state in which an angle 1403 between the first display region 1431 and the second display region 1432 is approximately 180 degrees. However, it is not limited thereto.

For example, the display 160 may be in the second state among the plurality of states. Referring to FIG. 14B, the display 160 may be in a state 1450 that is the second state. For example, the state 1450 may be a folding state in which the second housing 1420 is fully folded in with respect to the first housing 1410 by the folding housing 1465. For example, the state 1450 may be a state in which the first direction 1401 is substantially opposite to the second direction 1402. For example, the state 1450 may be a state in which the first display region 1431 is substantially superimposed on the second display region 1432. For example, the state 1450 may be a state in which an angle 1453 between the first display region 1431 and the second display region 1432 is approximately 0 degrees. However, it is not limited thereto.

In the state 1450, the display 160 may be bent by rotation provided via the folding housing 1465. For example, the third display region 1433 may be bent in the state 1450. For example, the third display region 1433 may be in a curvedly bent state to prevent breakage of the display 160 in the state 1450. However, the it is not limited thereto. Although not illustrated in FIGS. 14A and 14B, the plurality of states may include one or more intermediate states between the state 1400 and the state 1450.

As described above, the electronic device 101 may comprise a display 160. The electronic device 101 may comprise a processor 120. The processor 120 may be configured to display, in a display region of the display 160, a visual object for concurrently displaying a first screen for a first subscriber identity module (SIM) and a second screen for a second SIM different from the first SIM. The processor 120 may be configured to, in response to an input for the visual object, display the first screen in a first partial region in the display region and display the second screen in a second partial region in the display region. The processor 120 may be configured to, based on at least a portion of a user input representing moving a boundary between the first screen and the second screen toward a first direction, display the second screen by extending the second screen in the display region and change a setting of the electronic device based on configuration information related to the second SIM. The processor 120 may be configured to, based on at least a portion of a user input representing moving the boundary toward a second direction opposite to the first direction, display the first screen by extending the first screen in the display region and change the setting of the electronic device based on configuration information related to the first SIM.

According to an embodiment, the electronic device 101 may comprise a first housing including a first surface and a second surface opposite to the first surface. The electronic device 101 may comprise a second housing including a third surface and a fourth surface opposite to the third surface. The electronic device 101 may comprise a third housing including a hinge structure rotatably connecting a first lateral side of the first housing and a second lateral side of the second housing facing a lateral side of the first housing. The display 160 may include a flexible display, disposed on the first surface and the third surface, extending across the third housing. The first partial region may represent a region corresponding to the first surface. The second partial region may represent a region corresponding to the third surface. The boundary may represent a region corresponding to the third housing between the first surface and the third surface.

According to an embodiment, the processor 120 may be configured to identify that a plurality of SIMs including the first SIM and the second SIM are set with respect to the electronic device 101. The processor 120 may be configured to, in response to identifying that the plurality of SIMs are set, activate a function of displaying the first screen and the second screen via a software application with respect to the visual object.

According to an embodiment, the processor 120 may be configured to display another visual object for displaying second notification information for the second SIM superimposed on the first screen and the visual object when displaying the first screen in the display region of the display 160. The processor 120 may be configured to display another visual object for displaying first notification information for the first SIM superimposed on the second screen and the visual object when displaying the second screen in the display region of the display 160.

According to an embodiment, the visual object may be displayed on a software application that controls at least another software application to be executable or may be displayed on a pop-up window displayed in response to at least one input.

According to an embodiment, the visual object may be positioned in a designated region in the display region, and the visual object may be set to refrain from being viewed via the display 160 based on an alpha value. The alpha value may represent transparency of the visual object.

According to an embodiment, the processor 120 may be configured to, in response to at least one user input for the designated region, display a visual object for authenticating a user of the electronic device 101. The processor 120 may be configured to, in response to at least one user input for the visual object for the authentication, display the first screen via the first partial region and display the second screen via the second partial region.

According to an embodiment, the processor 120 may be configured to, based on at least a portion of the user input representing moving the boundary toward the first direction, in case that a size of the second partial region is greater than a reference value, display the second screen in the display region of the display 160. The processor 120 may be configured to, based at least a portion of the user input representing moving the boundary toward the second direction, in case that a size of the first partial region is greater than the reference value, display the first screen in the display region of the display 160.

According to an embodiment, the processor 120 may be configured to, based on at least a portion of the user input representing moving the boundary toward the first direction, in case that a size of the second partial region is less than or equal to a reference value, display the second screen in the second partial region having an expanded size and display the first screen in the first partial region. The processor 120 may be configured to, based on at least a portion of the user input representing moving the boundary toward the second direction, in case that a size of the first partial region is less than or equal to the reference value, display the first screen in the first partial region having an expanded size and display the second screen in the second partial region having the reduced size.

According to an embodiment, the first screen may include a first set of visual object for displaying a first set of software application. The second screen may include a second set of visual object for displaying a second set of software application different from the first set of software application.

According to an embodiment, the processor 120 may be configured to display a third screen including a visual object for displaying the first screen and a visual object for displaying the second screen in the display region of the display 160. The processor 120 may be configured to, in response to an input for the visual object for displaying the first screen, display the first screen in the display region. The processor 120 may be configured to, in response to an input for the visual object for displaying the second screen, display the second screen in the display region.

According to an embodiment, the processor 120 may be configured to, in response to an input for the visual object for displaying the first screen, display a visual object for authenticating a first user related to the first SIM. The processor 120 may be configured to, in response to an input for the visual object for displaying the second screen, display a visual object for authenticating a second user related to the second SIM different from the first user.

According to an embodiment, the processor 120 may be configured to identify a designated gesture for a visual object in the first screen. The processor 120 may be configured to, based on the designated gesture, transmit data for the visual object from the first SIM to the second SIM.

According to an embodiment, the designated gesture may include a drag-and-drop.

As described above, a method performed by an electronic device 101 may comprise displaying, in a display region of a display 160 of the electronic device 101, a visual object for concurrently displaying a first screen for a first subscriber identity module (SIM) and a second screen for a second SIM different from the first SIM. The method may comprise, in response to an input for the visual object, displaying the first screen in a first partial region in the display region and displaying the second screen in a second partial region in the display region. The method may comprise, based on at least a portion of a user input representing moving a boundary between the first screen and the second screen toward a first direction, displaying the second screen by extending the second screen in the display region and changing a setting of the electronic device based on configuration information related to the second SIM. The method may comprise, based on at least a portion of a user input representing moving the boundary toward a second direction opposite to the first direction, displaying the first screen by extending the first screen in the display region and changing the setting of the electronic device based on configuration information related to the first SIM.

According to an embodiment, the electronic device 101 may comprise a first housing including a first surface and a second surface opposite to the first surface. The electronic device 101 may comprise a second housing including a third surface and a fourth surface opposite to the third surface. The electronic device 101 may comprise a third housing including a hinge structure rotatably connecting a first lateral side of the first housing and a second lateral side of the second housing facing a lateral side of the first housing. The display 160 may include a flexible display, disposed on the first surface and the third surface, extending across the third housing. The first partial region may represent a region corresponding to the first surface. The second partial region may represent a region corresponding to the third surface. The boundary may represent a region corresponding to the third housing between the first surface and the third surface.

According to an embodiment, the method may comprise identifying that a plurality of SIMs including the first SIM and the second SIM are set with respect to the electronic device 101. The method may comprise, in response to identifying that the plurality of SIMs are set, activating a function of displaying the first screen and the second screen via a software application with respect to the visual object.

According to an embodiment, the method may comprise displaying another visual object for displaying second notification information for the second SIM superimposed on the first screen and the visual object when displaying the first screen in the display region of the display 160. The method may comprise displaying another visual object for displaying first notification information for the first SIM superimposed on the second screen and the visual object when displaying the second screen in the display region of the display 160.

According to an embodiment, the visual object may be displayed on a software application that controls at least another software application to be executable or may be displayed on a pop-up window displayed in response to at least one input.

According to an embodiment, the visual object may be positioned in a designated region in the display region, and the visual object may be set to refrain from being viewed via the display 160 based on an alpha value. The alpha value may represent transparency of the visual object.

According to an embodiment, the method may comprise, in response to at least one user input for the designated region, displaying a visual object for authenticating a user of the electronic device 101. The method may comprise, in response to at least one user input for the visual object for the authentication, displaying the first screen via the first partial region and displaying the second screen via the second partial region.

According to an embodiment, the method may comprise, based on at least a portion of the user input representing moving the boundary toward the first direction, in case that a size of the second partial region is greater than a reference value, displaying the second screen in the display region of the display 160. The method may comprise, based at least a portion of the user input representing moving the boundary toward the second direction, in case that a size of the first partial region is greater than the reference value, displaying the first screen in the display region of the display 160.

According to an embodiment, the method may comprise, based on at least a portion of the user input representing moving the boundary toward the first direction, in case that a size of the second partial region is less than or equal to a reference value, displaying the second screen in the second partial region having an expanded size and displaying the first screen in the first partial region. The method may comprise, based on at least a portion of the user input representing moving the boundary toward the second direction, in case that a size of the first partial region is less than or equal to the reference value, displaying the first screen in the first partial region having an expanded size and displaying the second screen in the second partial region having the reduced size.

According to an embodiment, the first screen may include a first set of visual object for displaying a first set of software application. The second screen may include a second set of visual object for displaying a second set of software application different from the first set of software application.

According to an embodiment, the method may comprise displaying a third screen including a visual object for displaying the first screen and a visual object for displaying the second screen in the display region of the display 160. The method may comprise, in response to an input for the visual object for displaying the first screen, displaying the first screen in the display region. The method may comprise, in response to an input for the visual object for displaying the second screen, displaying the second screen in the display region.

According to an embodiment, the method may comprise, in response to an input for the visual object for displaying the first screen, displaying a visual object for authenticating a first user related to the first SIM. The method may comprise, in response to an input for the visual object for displaying the second screen, displaying a visual object for authenticating a second user related to the second SIM different from the first user.

According to an embodiment, the method may comprise identifying a designated gesture for a visual object in the first screen. The method may comprise, based on the designated gesture, transmitting data for the visual object from the first SIM to the second SIM.

According to an embodiment, the designated gesture may include a drag-and-drop.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a display (160); and
a processor (120),
wherein the processor (120) is configured to:
display, in a display region of the display (160), a visual object for concurrently displaying a first screen for a first subscriber identity module (SIM) and a second screen for a second SIM different from the first SIM,
in response to an input for the visual object, display the first screen in a first partial region in the display region and display the second screen in a second partial region in the display region,
based on at least a portion of a user input representing moving a boundary between the first screen and the second screen toward a first direction, display the second screen by extending the second screen in the display region and change a setting of the electronic device (101) based on configuration information related to the second SIM, and
based on at least a portion of a user input representing moving the boundary toward a second direction opposite to the first direction, display the first screen by extending the first screen in the display region and change the setting of the electronic device (101) based on configuration information related to the first SIM.

2. The electronic device (101) of claim 1,
wherein the electronic device (101) comprises:
a first housing including a first surface and a second surface opposite to the first surface;
a second housing including a third surface and a fourth surface opposite to the third surface;
a third housing including a hinge structure rotatably connecting a first lateral side of the first housing and a second lateral side of the second housing facing a lateral side of the first housing,
wherein the display (160) includes a flexible display, disposed on the first surface and the third surface, extending across the third housing,
wherein the first partial region represents a region corresponding to the first surface,
wherein the second partial region represents a region corresponding to the third surface, and
wherein the boundary represents a region corresponding to the third housing between the first surface and the third surface.

3. The electronic device (101) of claim 1,
wherein the processor (120) is configured to:
identify that a plurality of SIMs including the first SIM and the second SIM are set with respect to the electronic device (101), and
in response to identifying that the plurality of SIMs are set, activate a function of displaying the first screen and the second screen via a software application with respect to the visual object.

4. The electronic device (101) of claim 1,
wherein the processor (120) is configured to:
display another visual object for displaying second notification information for the second SIM superimposed on the first screen and the visual object when displaying the first screen in the display region of the display (160), and
display another visual object for displaying first notification information for the first SIM superimposed on the second screen and the visual object when displaying the second screen in the display region of the display (160).

5. The electronic device (101) of claim 1,
wherein the visual object is displayed on a software application that controls at least another software application to be executable or is displayed on a pop-up window displayed in response to at least one input.

6. The electronic device (101) of claim 1,
wherein the visual object is positioned in a designated region in the display region, and the visual object is set to refrain from being viewed via the display (160) based on an alpha value, and
wherein the alpha value represents transparency of the visual object.

7. The electronic device (101) of claim 6,
wherein the processor (120) is configured to:
in response to at least one user input for the designated region, display a visual object for authenticating a user of the electronic device (101), and
in response to at least one user input for the visual object for the authentication, display the first screen via the first partial region and display the second screen via the second partial region.

8. The electronic device (101) of claim 1,
wherein the processor (120) is configured to:
based on at least a portion of the user input representing moving the boundary toward the first direction, in case that a size of the second partial region is greater than a reference value, display the second screen in the display region of the display (160), and
based on at least a portion of the user input representing moving the boundary toward the second direction, in case that a size of the first partial region is greater than the reference value, display the first screen in the display region of the display (160).

9. The electronic device (101) of claim 1,
wherein the processor (120) is configured to:
based on at least a portion of the user input representing moving the boundary toward the first direction, in case that a size of the second partial region is less than or equal to a reference value, display the second screen in the second partial region having an expanded size and display the first screen in the first partial region having a reduced size, and
based on at least a portion of the user input representing moving the boundary toward the second direction, in case that a size of the first partial region is less than or equal to the reference value, display the first screen in the first partial region having an expanded size and display the second screen in the second partial region having a reduced size.

10. The electronic device (101) of claim 1,
wherein the first screen includes a first set of visual object for displaying a first set of software application, and
wherein the second screen includes a second set of visual object for displaying a second set of software application different from the first set of software application.

11. The electronic device (101) of claim 1,
wherein the processor (120) is configured to:
display a third screen including a visual object for displaying the first screen and a visual object for displaying the second screen in the display region of the display (160),
in response to an input for the visual object for displaying the first screen, display the first screen in the display region, and
in response to an input for the visual object for displaying the second screen, display the second screen in the display region.

12. The electronic device (101) of claim 11,
wherein the processor (120) is configured to:
in response to an input for the visual object for displaying the first screen, display a visual object for authenticating a first user related to the first SIM, and
in response to an input for the visual object for displaying the second screen, display a visual object for authenticating a second user related to the second SIM different from the first user.

13. The electronic device (101) of claim 1,
wherein the processor (120) is configured to:
identify a designated gesture for a visual object in the first screen,
based on the designated gesture, transmit data for the visual object from the first SIM to the second SIM.

14. The electronic device (101) of claim 13,
wherein the designated gesture includes a drag-and-drop.

15. A method performed by an electronic device (101) comprising:
displaying, in a display region of a display (160) of the electronic device (101), a visual object for concurrently displaying a first screen for a first subscriber identity module (SIM) and a second screen for a second SIM different from the first SIM,
in response to an input for the visual object, displaying the first screen in a first partial region in the display region and displaying the second screen in a second partial region in the display region,
based on at least a portion of a user input representing moving a boundary between the first screen and the second screen toward a first direction, displaying the second screen by extending the second screen in the display region and changing a setting of the electronic device (101) based on configuration information related to the second SIM, and
based on at least a portion of a user input representing moving the boundary toward a second direction opposite to the first direction, displaying the first screen by extending the first screen in the display region and changing the setting of the electronic device (101) based on configuration information related to the first SIM.
